# EUROPEAN PATENT APPLICATION

(11) **EP 2 543 709 A1**
(43) Date of publication of application: **09.01.2013**
(21) Application number: 11750600.6
(22) Date of filing: 28.02.2011
(51) Int. Cl.: C09J 7/02, C09J 201/00, H01B 5/14

(54) **ELECTRICALLY CONDUCTIVE ADHESIVE TAPE**

(30) Priority: 03.03.2010 JP 2010046702
(71) Applicant: Nitto Denko Corporation, Osaka 567-8680 (JP)
(72) Inventor: DAIGAKU, Noritsugu, Ibaraki-shi Osaka 567-8680 (JP); NAKAO, Kota, Ibaraki-shi Osaka 567-8680 (JP); MURAKAMI, Ai, Ibaraki-shi Osaka 567-8680 (JP); NONAKA, Takahiro, Ibaraki-shi Osaka 567-8680 (JP); TAMAI, Hironori, Ibaraki-shi Osaka 567-8680 (JP); BUZOUJIMA, Yasushi, Ibaraki-shi Osaka 567-8680 (JP); NAKANO, Shinya, Ibaraki-shi Osaka 567-8680 (JP); TAIRA, Shintarou, Ibaraki-shi Osaka 567-8680 (JP); OTSUKA, Tetsuya, Ibaraki-shi Osaka 567-8680 (JP)
(74) Representative: Grünecker, Kinkeldey, Stockmair & Schwanhäusser
(86) International application number: PCT/JP2011/054511
(87) International publication number: WO 2011/108490

(57) **Abstract**

Provided is an electroconductive pressure-sensitive adhesive tape which can exhibit stable electrical conductivity even when used over a long duration and/or used under severe environmental conditions. The electroconductive pressure-sensitive adhesive tape has a metallic foil and, on one side thereof, a pressure-sensitive adhesive layer, in which the electroconductive pressure-sensitive adhesive tape has a maximum resistance in the first cycle of 1 Ω or less and has a maximum resistance in the 200th cycle being 5 times or less the maximum resistance in the first cycle, as measured in a thermo-cycle test.

## Description

### Technical Field

The present invention relates to electroconductive pressure-sensitive adhesive tapes. More specifically, it relates to electroconductive pressure-sensitive adhesive tapes to be used typically for electrical conduction between two points separated from each other.

### Background Art

Electroconductive pressure-sensitive adhesive tapes have electrical conductivity (particularly, electrical conductivity in the thickness direction) and are used typically for electrical conduction between two points separated from each other and for electromagnetic shielding. Exemplary customary electroconductive pressure-sensitive adhesive tapes include electroconductive pressure-sensitive adhesive tapes each including a metallic foil and a pressure-sensitive adhesive layer (tacky adhesive layer) arranged on one side of the metallic foil, in which a conducting part is provided on a side of the metallic foil covered by the pressure-sensitive adhesive layer, and the conducting part penetrates the pressure-sensitive adhesive layer and has a terminal at the front end thereof (see, for example, Patent Literature (PTL) 1, PTL 2, PTL 3, and PTL 4); and electroconductive pressure-sensitive adhesive tapes each including a metallic foil, and a pressure-sensitive adhesive layer being provided on the metallic foil and containing a dispersed electroconductive filler such as nickel powder (see, for example, PTL 5 and PTL 6).

With increasing functions and increasing variety in usage form of recent electronic appliances, electroconductive pressure-sensitive adhesive tapes for use in such electronic appliances require stable electrical conductivity even when they are used under more severe environmental conditions for a further longer duration. However, the aforementioned electroconductive pressure-sensitive adhesive tapes, when used typically in internal wiring of the electronic appliances, suffer from gradually increasing contact resistance of regions where the electroconductive pressure-sensitive adhesive tapes are affixed, and thereby suffer from decrease in electrical conductivity with time. In the present situation, therefore, there has not yet been obtained an electroconductive pressure-sensitive adhesive tape which can exhibit stable electrical conductivity upon use over a long duration and/or use under severe environmental conditions.

### Citation List

### Patent Literature

PTL 1: Japanese Examined Utility Model Registration Publication No. S63-46980
PTL 2: Japanese Unexamined Patent Application Publication No. H08-185714
PTL 3: Japanese Unexamined Patent Application Publication No. H10-292155
PTL 4: Japanese Unexamined Patent Application Publication No. H11-302615
PTL 5: Japanese Unexamined Patent Application Publication No. 2004-263030
PTL 6: Japanese Unexamined Patent Application Publication No. 2005-277145

### Summary of Invention

### Technical Problem

Accordingly, an object of the present invention is to provide an electroconductive pressure-sensitive adhesive tape which can exhibit stable electrical conductivity even when used over a long duration and/or used under severe environmental conditions.

### Solution to Problem

After intensive investigations, the present inventors have found that a pressure-sensitive adhesive tape having a specific structure serves as an electroconductive pressure-sensitive adhesive tape which can exhibit stable electrical conductivity even when used over a long duration and/or used under severe environmental conditions, by controlling, to specific ranges, a maximum resistance in the first cycle, and a ratio of a maximum resistance in the 200th cycle to the maximum resistance in the first cycle as measured in a specific thermo-cycle test. The present invention has been made based on these findings. In addition, the present inventors have also found that a pressure-sensitive adhesive tape having a specific structure serves as an electroconductive pressure-sensitive adhesive tape which can exhibit stable electrical conductivity, by controlling the total area of terminals present per unit area of a pressure-sensitive adhesive layer to a specific range. The present invention has been made also based on these findings.

Specifically, the present invention provides, in an aspect, an electroconductive pressure-sensitive adhesive tape including a metallic foil; and a pressure-sensitive adhesive layer present on one side of the metallic foil, in which the electroconductive pressure-sensitive adhesive tape has a maximum resistance in the first cycle of 1 Ω or less and has a maximum resistance in the 200th cycle being 5 times or less the maximum resistance in the first cycle, each measured in a thermo-cycle test. The thermo-cycle test is performed as follows.
The electroconductive pressure-sensitive adhesive tape is affixed to a plated silver coating so as to allow an affixed region to have a size of 5 mm by 6 mm (area: 30 mm²); a constant current of 2 A is applied to the electroconductive pressure-sensitive adhesive tape and the plated silver coating including the affixed region; this is placed in a thermostatic chamber, cooled and heated in repeated cycles, and, during the repeated cycles, a resistance of the affixed region is continuously measured, in which a temperature in the thermostatic chamber is preset so that the temperature is lowered from 25°C to -40°C, held at -40°C for 10 minutes, raised to 85°C, held at 85°C for 10 minutes, and lowered again to 25°C, and this thermo-cycle is regarded as one cycle and repeated.

The electroconductive pressure-sensitive adhesive tape is preferably a pressure-sensitive adhesive tape including the metallic foil; the pressure-sensitive adhesive layer present on one side of the metallic foil; and a terminal or terminals exposed from a surface of the tape on the pressure-sensitive adhesive layer side, in which the electroconductive pressure-sensitive adhesive tape has a total area of the terminal or terminals of from 0.15 to 5 mm² per 30 mm² of the pressure-sensitive adhesive layer.

In the electroconductive pressure-sensitive adhesive tape, the terminal or terminals are preferably a terminal or terminals each formed by boring a through-hole from the metallic foil side to form a fin or fins of the metallic foil on a surface of the tape on the pressure-sensitive adhesive layer side, and folding back the fin or fins.

The electroconductive pressure-sensitive adhesive tape preferably has an average terminal area of from 50,000 to 500,000 µm² per one through-hole.

The present invention provides, in another aspect, an electroconductive pressure-sensitive adhesive tape including a metallic foil; a pressure-sensitive adhesive layer present on one side of the metallic foil; and a terminal or terminals exposed from a surface of the tape on the pressure-sensitive adhesive layer side, in which the electroconductive pressure-sensitive adhesive tape has a total area of the terminal or terminals of from 0.15 to 5 mm² per 30 mm² of the pressure-sensitive adhesive layer.

In this electroconductive pressure-sensitive adhesive tape, the terminal or terminals are preferably a terminal or terminals each formed by boring a through-hole from the metallic foil side to form a fin or fins of the metallic foil on a surface of the tape on the pressure-sensitive adhesive layer side, and folding back the fin or fins.

The electroconductive pressure-sensitive adhesive tape preferably has an average terminal area of from 50,000 to 500,000 µm² per one through-hole.

### Advantageous Effects of Invention

The electroconductive pressure-sensitive adhesive tapes according to the present invention can exhibit stable electrical conductivity even when used over a long duration and/or used under severe environmental conditions.

### Brief Description of Drawings

[Fig. 1] Fig. 1 is a schematic view (plan view) illustrating an exemplary testing substrate for use in thermo-cycle tests of electroconductive pressure-sensitive adhesive tapes according to the present invention.
[Fig. 2] Fig. 2 is a schematic view illustrating an equivalent circuit to an electric circuit of the testing substrate for use in the thermo-cycle tests of the electroconductive pressure-sensitive adhesive tapes according to the present invention.
[Fig. 3] Fig. 3 is a schematic view (cross-sectional view at an affixed region 13 in Fig. 1) illustrating an exemplary resistance-testing sample for use in the thermo-cycle tests of the electroconductive pressure-sensitive adhesive tapes according to the present invention.
[Fig. 4] Fig. 4 is a view illustrating a profile of a temperature setting (thermo-cycle condition) in the first and second cycles in the thermo-cycle tests of the electroconductive pressure-sensitive adhesive tapes according to the present invention.
[Fig. 5] Fig. 5 is a view partially illustrating profiles of an ambient temperature in the chamber (in-chamber temperature) and a surface temperature of an electroconductive pressure-sensitive adhesive tape (tape temperature) each measured in thermo-cycle tests in working examples.
[Fig. 6] Fig. 6 is a schematic view (cross-sectional view at a terminal) illustrating an exemplary electroconductive pressure-sensitive adhesive tape according to an embodiment of the present invention (electroconductive pressure-sensitive adhesive tape (a)).
[Fig. 7] Fig. 7 is a schematic view (plan view) illustrating an exemplary electroconductive pressure-sensitive adhesive tape according to an embodiment of the present invention (electroconductive pressure-sensitive adhesive tape (a)).
[Fig. 8] Fig. 8 is a schematic view partially illustrating an exemplary production method of the electroconductive pressure-sensitive adhesive tape according to the present invention (electroconductive pressure-sensitive adhesive tape (a)).
[Fig. 9] Fig. 9 is a schematic view (plan view) illustrating an exemplary pin for use in the production of the electroconductive pressure-sensitive adhesive tape according to the present invention (electroconductive pressure-sensitive adhesive tape (a)).
[Fig. 10] Fig. 10 is a schematic view (side view) illustrating the exemplary pin for use in the production of the electroconductive pressure-sensitive adhesive tape according to the present invention (electroconductive pressure-sensitive adhesive tape (a)).
[Fig. 11] Fig. 11 is a schematic view (plan view) partially illustrating an exemplary arrangement of pins for use in the production of the electroconductive pressure-sensitive adhesive tape according to the present invention (electroconductive pressure-sensitive adhesive tape (a)).
[Fig. 12] Fig. 12 is a schematic view (cross-sectional view) illustrating a cylindrical concavity formed in a surface of a negative die for use in the production of the electroconductive pressure-sensitive adhesive tape according to the present invention (electroconductive pressure-sensitive adhesive tape (a)).
[Fig. 13] Fig. 13 is a schematic view (cross-sectional view) illustrating an exemplary alignment between a pin and a cylindrical concavity upon punching (formation of a through-hole) using a positive die and a negative die in the production of the electroconductive pressure-sensitive adhesive tape according to the present invention (electroconductive pressure-sensitive adhesive tape (a)).
[Fig. 14] Fig. 14 is a schematic view illustrating an exemplary shape of fins upon the formation of a through-hole using a positive die having rhombic quadrangular pyramidal pins in combination with a negative die having a cylindrical concavities in Step 1 of a production method of the electroconductive pressure-sensitive adhesive tape according to the present invention (electroconductive pressure-sensitive adhesive tape (a)).
[Fig. 15] Fig. 15 is a schematic view illustrating an exemplary embodiment of the formation of a terminal by folding back fins using a squeegee in Step 2 of the production method of the electroconductive pressure-sensitive adhesive tape according to the present invention (electroconductive pressure-sensitive adhesive tape (a)).
[Fig. 16] Fig. 16 is a schematic view illustrating an exemplary formation of a terminal by press-working of fins in a customary production method of an electroconductive pressure-sensitive adhesive tape.
[Fig. 17] Fig. 17 is a chart illustrating an exemplary result of resistance measurement in a thermo-cycle test using an electroconductive pressure-sensitive adhesive tape according to Example 2.
[Fig. 18] Fig. 18 is a schematic view (plan view) illustrating a testing substrate used in thermo-cycle tests in the working examples.

### Description of Embodiments

Electroconductive pressure-sensitive adhesive tapes according to embodiments of the present invention are single-coated pressure-sensitive adhesive tapes each including a metallic foil; and, on one side thereof, a pressure-sensitive adhesive layer. As used herein the term "electroconductive pressure-sensitive adhesive tape(s)" also includes those in the form of a sheet, i.e., "electroconductive pressure-sensitive adhesive sheet(s)."

An electroconductive pressure-sensitive adhesive tape according to an embodiment of the present invention has a maximum resistance in the first cycle of 1 Ω or less, preferably from 0.0001 to 0.5 Ω, more preferably from 0.0001 to 0.05 Ω, as measured in a thermo-cycle test mentioned later. The electroconductive pressure-sensitive adhesive tape, by controlling the maximum resistance in the first cycle to 1 Ω or less, can exhibit sufficient electrical conductivity as an electroconductive pressure-sensitive adhesive tape. The "maximum resistance in the first cycle" is also referred to as an "initial resistance."

The electroconductive pressure-sensitive adhesive tape according to the present invention has a maximum resistance in the 200th cycle 5 times or less (e.g., from 1 to 5 times), preferably from 1 to 3 times, more preferably from 1 to 2 times, and furthermore preferably from 1 to 1.5 times the maximum resistance in the first cycle (initial resistance), as measured in the after-mentioned thermo-cycle test. The ratio of the maximum resistance in the 200th cycle to the maximum resistance in the first cycle [(maximum resistance in the 200th cycle)/(maximum resistance in the first cycle)] (time) is herein also referred to as a "resistance ratio."

The resistance ratio serves as an index indicating to which extent the electroconductive pressure-sensitive adhesive tape exhibits stable electrical conductivity when the electroconductive pressure-sensitive adhesive tape is used over a long duration and/or used under severe environment conditions. The electroconductive pressure-sensitive adhesive tape, when having a small resistance ratio of 5 times or less, allows a product using the tape to exhibit high reliability. This is probably because the electroconductive pressure-sensitive adhesive tape is resistant to decrease in electrical conductivity with time in a region where it is affixed, and this allows a current to flow stably even when the tape is used over a long duration and/or used under severe environmental conditions. In contrast, an electroconductive pressure-sensitive adhesive tape having a resistance ratio of much more than 5 times may cause a product using the tape to have insufficient reliability. This is because the electroconductive pressure-sensitive adhesive tape may suffer from decrease in electrical conductivity with time in a region where it is affixed, and this may cause abrupt increase in resistance and defective conduction particularly when the tape is used under severe environmental conditions over a long duration.

The thermo-cycle test is performed in the following manner. A sample electroconductive pressure-sensitive adhesive tape is affixed to a silver-plated conductor trace on a substrate to form an electric circuit and thereby yields a testing substrate having the electric circuit. The testing substrate is exposed to an ambient temperature environment in which the temperature is periodically lowered and raised while applying a constant electric current to the electric circuit. During this process, the resistance between the metallic foil of the electroconductive pressure-sensitive adhesive tape and the silver-plated conductor trace is continuously measured. Specifically, the contact resistance of a region (affixed region) where the electroconductive pressure-sensitive adhesive tape and the silver-plated conductor trace are affixed to each other is continuously measured.
The maximum resistance in the first cycle and the maximum resistance in the 200th cycle may be measured in the following manner. The sample electroconductive pressure-sensitive adhesive tape is affixed to the plated silver coating (silver-plated conductor trace) so as to allow an affixed region to have a size of 5 mm by 6 mm (area: 30 mm²) and a constant current of 2 A is applied to the electroconductive pressure-sensitive adhesive tape including the affixed region and the plated silver coating (silver-plated conductor trace). This is placed in a thermostatic chamber, cooled and heated in repeated cycles, and during the repeated cycles, the resistance (contact resistance) of the affixed region is continuously measured. The thermostatic chamber is preset so as to repeat thermo-cycles. In one cycle of thermo-cycles, the temperature in the chamber (thermo-cycle condition) is set so that the temperature is lowered from 25°C to -40°C, held at -40°C for 10 minutes, raised to 85°C, held at 85°C for 10 minutes, and lowered again to 25°C. More specifically, the above values may be measured according to a technique described in the following [Thermo-cycle Test].

### [Thermo-cycle Test]

### (Preparation of Testing Substrate)

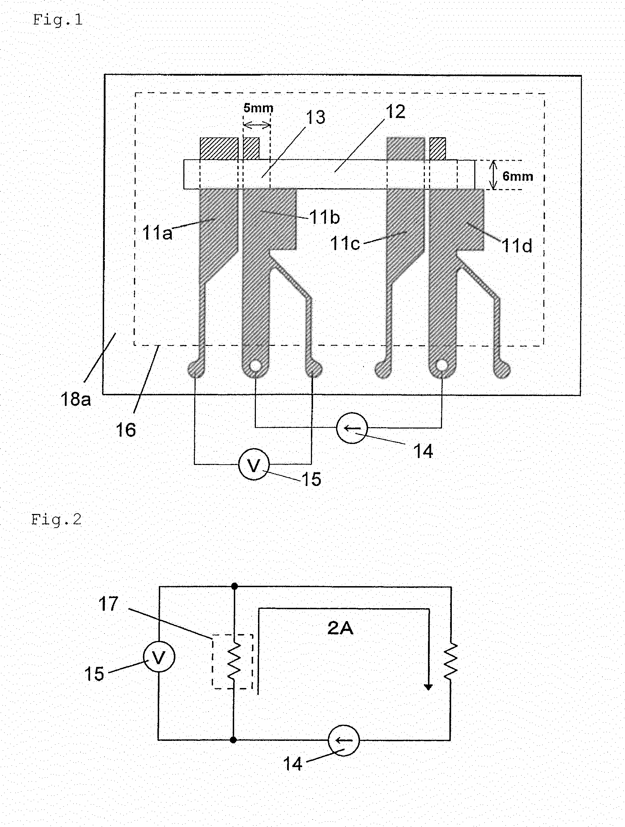

A testing substrate is prepared by preparing a glass epoxy substrate bearing silver-plated conductor traces formed thereon, affixing a sample electroconductive pressure-sensitive adhesive tape to the silver-plated conductor traces, and connecting the silver-plated conductor traces to a constant-current power supply and a potentiometer to form an electric circuit. Fig. 1 depicts an exemplary concrete arrangement of the testing substrate. A glass epoxy substrate 18a bears thereon silver-plated conductor traces (hereinafter also simply referred to as "conductor traces") 11a, 11b, 11c, and 11d. An electroconductive pressure-sensitive adhesive tape 12 (width: 6 mm) is affixed to the conductor traces 11a to 11d through compression bonding with one reciprocating movement of a 5-kg roller thereon. The affixation herein is performed so as to allow an affixed region 13 between the conductor trace 11b and the electroconductive pressure-sensitive adhesive tape 12 to have a size of 5 mm by 6 mm (area: 30 mm²). The affixed region 13 provides electrical conduction (electrical conduction in the thickness direction) between the conductor trace 11b and the metallic foil of the electroconductive pressure-sensitive adhesive tape 12.
When the electroconductive pressure-sensitive adhesive tape has a width less than 6 mm, the evaluation (testing) may be performed by applying the electroconductive pressure-sensitive adhesive tape so as to have a total width of 6 mm. Typically, when the electroconductive pressure-sensitive adhesive tape has a width of 2 mm, three plies of the electroconductive pressure-sensitive adhesive tape may be applied in parallel.
Next, the conductor traces 11b and 11d are connected to a constant-current power supply 14, whereas the conductor traces 11a and 11b are connected to a potentiometer 15 to form an electric circuit. The resulting article is used as a testing substrate. Though not limited, the conductor traces may be connected to the constant-current power supply or to the potentiometer by using common connecting means such as a lead wire or soldering. Fig. 2 depicts an equivalent circuit to the electric circuit in the testing substrate illustrated in Fig. 1. The reference sign 17 in Fig. 2 represents a resistance (contact resistance) of the affixed region 13 in Fig. 1.

### (Preparation of Resistance-testing Sample)

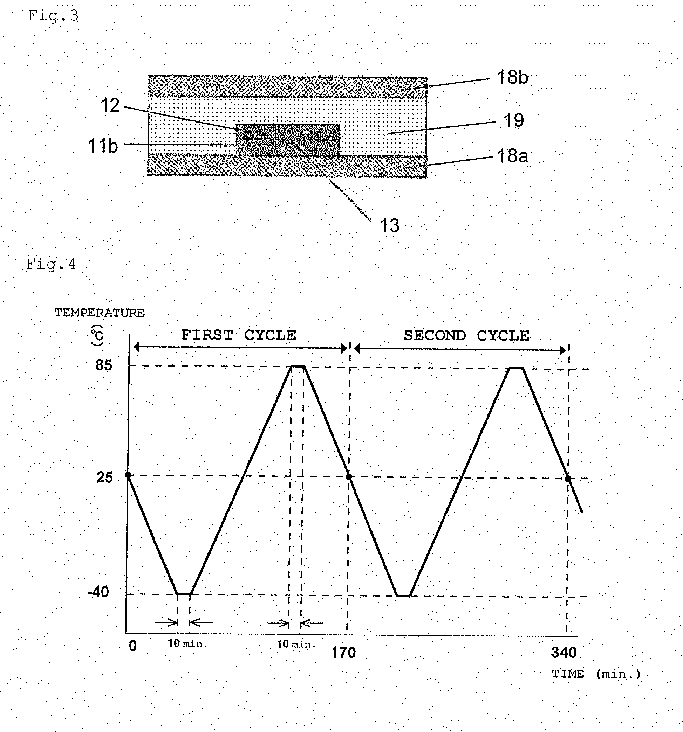

A resistance-testing sample is prepared by placing a glass plate on the testing substrate, and sealing at least an affixed region of the electric circuit in the testing substrate with an ethylene-vinyl acetate copolymer (EVA), in which the affixed region is a region where a conductor trace and the electroconductive pressure-sensitive adhesive tape are affixed to each other, and the sealing is performed between the glass epoxy substrate and the glass plate. Fig. 3 depicts a schematic view (cross-sectional view at the affixed region 13 in Fig. 1) of the resistance-testing sample. In the resistance-testing sample, at least the applied region (affixed region) 13 between the conductor trace 11b and the electroconductive pressure-sensitive adhesive tape 12 is sealed with the EVA (cured article of EVA) 19 between the glass epoxy substrate 18a and the glass plate 18b. Fig. 1 illustrates an exemplary region (sealing region) 16 which is to be sealed with the EVA (cured article of EVA). Though not limited, the sealing with the EVA may be performed typically in the following manner. Initially, a film of a thermosetting ethylene-vinyl acetate copolymer (EVA film) is placed on the sealing region 16 in the testing substrate illustrated in Fig. 1, and a glass plate is further placed thereon to give a laminate having a structure of "(testing substrate)/(EVA film)/(glass plate)." The EVA film may for example be a thermosetting EVA film having a vinyl acetate content of 28%. The laminate is placed in a vacuum pressing machine, in which evacuation is initially performed at 150°C for 40 seconds without pressing, the laminate in the evacuation state is pressed at a temperature of 150°C and a pressure of 0.1 MPa for 400 seconds, but the evacuation is completed 400 seconds from the beginning thereof. The laminate is then retrieved from the vacuum pressing machine and heated in an oven at 150°C for 40 minutes to thermally cure the EVA.
Thus, at least the applied regions(s) (affixed region(s)) between the conductor traces and the electroconductive pressure-sensitive adhesive tape are sealed with the EVA. This provides stable measurement results with small errors.

### (Setting of Ambient Temperature In Chamber (Thermostatic Chamber))

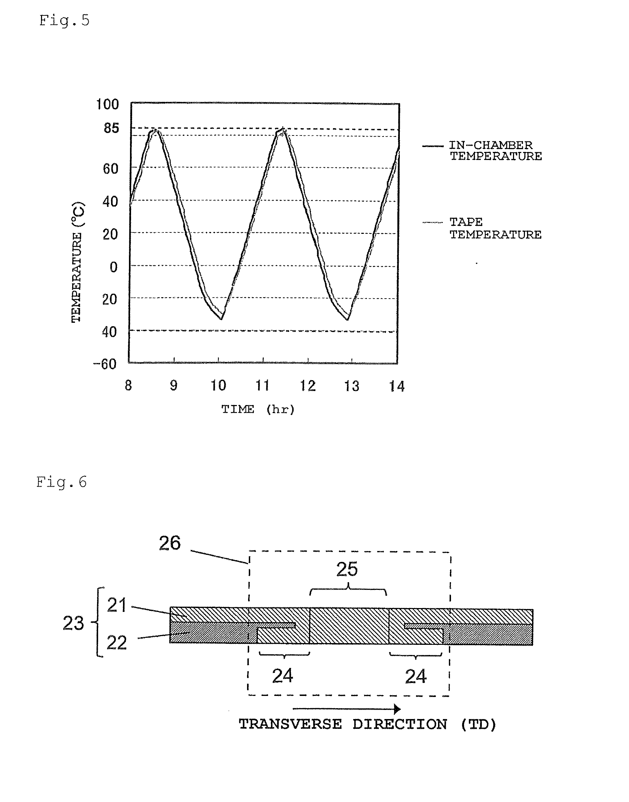

The temperature in the chamber (in-chamber temperature; thermo-cycle condition) is preset as follows. Though not limited, the humidity (relative humidity) in the chamber is not required to be controlled during the ambient temperature in the chamber change in accordance with the setting below.
The temperature is 25°C at the start, lowered from 25°C to -40°C at a rate of 100°C/hour, and held at -40°C for 10 minutes. Next, the temperature is raised from -40°C to 85°C at a rate of 100°C/hour, and held at 85°C for 10 minutes. Then, the temperature is lowered to 25°C at a rate of 100°C/hour. Such thermo-cycle condition is regarded as one cycle, and repeated at least 200 times. One cycle needs 170 minutes. Fig. 4 illustrates a profile of the temperature setting (thermo-cycle condition) of the first and second cycles in the chamber. This temperature setting (thermo-cycle condition) is in accordance with IEC Standards, IEC 61215 (the second edition) and IEC 61646 (the second edition).
The chamber (thermostatic chamber) may be a known or common chamber. Examples of the chamber include, but are not limited to, commercially available products such as trade name "PL-3KP" (supplied by ESPEC Corporation) and trade name "PWL-3KP" (supplied by ESPEC Corporation). Fig. 5 illustrates an exemplary profile of the in-chamber temperature (in-chamber ambient temperature) of the chamber (thermostatic chamber) and an exemplary profile of the surface temperature of the electroconductive pressure-sensitive adhesive tape in the testing substrate when the temperature of the chamber (trade name "PL-3KP" supplied by ESPEC Corporation) is controlled according to the setting. The chamber herein is used in "(1) Resistance (Thermo-cycle Test)" in (Evaluations) mentioned later. The in-chamber temperature of the chamber varies in accordance with the setting condition, in which the highest temperature is about 85°C being substantially the same with the setting, and the lowest temperature is about -30°C being somewhat higher than the setting. The surface temperature of the electroconductive pressure-sensitive adhesive tape varies substantially in the same manner as with the in-chamber temperature.

### (Measurement of Resistance)

To the electric circuit in the resistance-testing sample, a constant current of 2 A is applied by a constant-current power supply (the constant-current power supply 14 in Fig. 1) (namely, a constant current of 2 A is applied to the affixed region 13 in Fig. 1), and the resistance-testing sample is placed in the chamber at an ambient temperature of 25°C. Next, the resistance-testing sample is repeatedly cooled and heated in accordance with the above temperature setting (thermo-cycle condition). During the cycles, the electrical voltage is continuously measured (at a sampling interval typically of 5 to 10 times/10 minutes) with the potentiometer 15 to continuously collect the resistance data of the affixed region 13. Thus, a maximum resistance in the first cycle (initial resistance) and a maximum resistance in the 200th cycle are determined, and the resistance ratio is calculated.

According to customary techniques, how stably an electroconductive pressure-sensitive adhesive tape exhibits electrical conductivity is evaluated in the following manner. The electroconductive pressure-sensitive adhesive tape is affixed to a conductor (electroconductor), the resulting article is exposed to an ambient temperature environment in which a high temperature and a low temperature are repeated alternately while ensuring electrical conduction between the conductor and a metallic foil of the electroconductive pressure-sensitive adhesive tape, and how much the electrical conductivity (i.e., resistance (contact resistance)) of the affixed region in the electroconductive pressure-sensitive adhesive tape varies before and after the exposure is examined and evaluated. However, this evaluation technique does not reveal whether the electroconductive pressure-sensitive adhesive tape exhibits electrical conductivity always stably during exposure to such high-temperature and low-temperature condition, because the change in electrical conductivity between before and after exposure to the ambient temperature environment is evaluated by comparing a resistance of the sample measured at room temperature before exposure with a resistance of the sample measured at room temperature after exposure. In consideration of these, the present inventors have employed the aforementioned thermo-cycle test for the evaluation of electrical conductivity of an electroconductive pressure-sensitive adhesive tape, in which the resistance (contact resistance) of the affixed region of the electroconductive pressure-sensitive adhesive tape is continuously measured even during exposure to such a high-temperature and low-temperature condition. As a result, the present inventors have found that customary electroconductive pressure-sensitive adhesive tapes have a gradually increasing resistance and thereby exhibit decreasing electrical conductivity with time particularly in a high-temperature environment, although the tapes have a small increase in resistance with time when the resistance is measured in a room temperature environment. In contrast, the electroconductive pressure-sensitive adhesive tape according to the present invention, as having a resistance ratio measured in the thermo-cycle test of 5 times or less, is resistant to increase in resistance measured in a high-temperature environment and can exhibit stable electrical conductivity even when used over a long duration and/or used under severe environmental conditions.

(Metallic Foil)
The metallic foil constituting the electroconductive pressure-sensitive adhesive tapes according to the present invention may be any metallic foil that can support by itself and has electrical conductivity. Examples of usable metallic foils include metallic foils made typically of copper, aluminum, nickel, silver, iron, lead, or an alloy of them. Among them, an aluminum foil and a copper foil are preferred, of which a copper foil is more preferred, from the viewpoints of electroconductivity, cost, and workability. The metallic foils may have undergone various surface treatments such as tin plating, silver plating, and gold plating. Specifically, in order to prevent increase in resistance due to corrosion, the metallic foil is particularly preferably a copper foil coated by tin plating (tin-plated copper foil).

Though not critical, the metallic foil has a thickness of, for example, preferably from 10 to 100 µm, more preferably from 20 to 80 µm, and furthermore preferably from 30 to 60 µm. The metallic foil, when having a thickness of 10 µm or more, may have a sufficient strength to contribute to more satisfactory workability. In contrast, the metallic foil, when having a thickness of 100 µm or less, may be advantageous in cost. When the electroconductive pressure-sensitive adhesive tape is an electroconductive pressure-sensitive adhesive tape having through-holes (electroconductive pressure-sensitive adhesive tape (a)) as mentioned later, the metallic foil, when having a thickness of 100 µm or less, may help the through-holes to be formed easily, thus resulting in better productivity.

### (Pressure-sensitive Adhesive Layer)

A pressure-sensitive adhesive for the formation of the pressure-sensitive adhesive layer constituting the electroconductive pressure-sensitive adhesive tapes according to the present invention is not limited in its type and is typified by acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorine-containing pressure-sensitive adhesives, epoxy pressure-sensitive adhesives, and other known pressure-sensitive adhesives. Each of such pressure-sensitive adhesives may be used alone or in combination. The pressure-sensitive adhesive may be a pressure-sensitive adhesive in any form, which is typified by active-energy-ray-curable pressure-sensitive adhesives, solvent-borne (solution) pressure-sensitive adhesives, emulsion pressure-sensitive adhesives, and thermally fusible pressure-sensitive adhesives (hot-melt pressure-sensitive adhesives).

Among them, an acrylic pressure-sensitive adhesive is preferred as the pressure-sensitive adhesive for the formation of the pressure-sensitive adhesive layer. Specifically, the pressure-sensitive adhesive layer is preferably an acrylic pressure-sensitive adhesive layer. The acrylic pressure-sensitive adhesive layer is preferably a pressure-sensitive adhesive layer (acrylic pressure-sensitive adhesive layer) formed from a pressure-sensitive adhesive composition containing an acrylic polymer as an essential component (acrylic pressure-sensitive adhesive composition). Though not critical, the content of the acrylic polymer in the pressure-sensitive adhesive layer (acrylic pressure-sensitive adhesive layer) (100 percent by weight) is preferably 65 percent by weight or more (e.g., from 65 to 100 percent by weight), and more preferably from 70 to 99 percent by weight. Where necessary, the pressure-sensitive adhesive composition may further include one or more other components (additives) in addition to the acrylic polymer.

The acrylic polymer is preferably an acrylic polymer derived from a (meth)acrylic alkyl ester whose alkyl moiety being a linear or branched-chain alkyl group as an essential monomer component. Such monomer components constituting the acrylic polymer may further include, as a copolymerizable monomer component, any of polar-group-containing monomers, multifunctional monomers, and other copolymerizable monomers. Such copolymerizable monomer components, when used, help the pressure-sensitive adhesive layer to have a higher bond strength to an adherend or to have a higher cohesive force. As used herein the term "(meth)acrylic" refers to "acrylic" and/or "methacrylic," and the same is true for other descriptions.

The (meth)acrylic alkyl ester whose alkyl moiety being a linear or branched-chain alkyl group (hereinafter also simply referred to as "(meth)acrylic alkyl ester") is exemplified by (meth)acrylic alkyl esters whose alkyl moiety having 1 to 20 carbon atoms, such as methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Among them, preferred are (meth)acrylic alkyl esters whose alkyl moiety having 2 to 10 carbon atoms, of which n-butyl acrylate is more preferred. Each of the (meth)acrylic alkyl esters may be used alone or in combination.

The content of the (meth)acrylic alkyl ester(s) is preferably from 50 to 100 percent by weight, and more preferably from 60 to 99.9 percent by weight, based on the total amount (100 percent by weight) of monomer components constituting the acrylic polymer.

Examples of the polar-group-containing monomers include carboxyl-containing monomers such as (meth)acrylic acid, itaconic acid, maleic acid, fumaric acid, crotonic acid, and isocrotonic acid (including acid-anhydride-containing monomers such as maleic anhydride and itaconic anhydride); hydroxyl-containing monomers including hydroxylalkyl (meth)acrylates such as 2-hydroxyethyl (meth)acrylate, 3-hydroxypropyl (meth)acrylate, 4-hydroxybutyl (meth)acrylate, and 6-hydroxyhexyl (meth)acrylate, as well as vinyl alcohol and allyl alcohol; amido-containing monomers such as (meth)acrylamide, N,N-dimethyl(meth)acrylamide, N-methylol(meth)acrylamide, N-methoxymethyl(meth)acrylamide, N-butoxymethyl(meth)acrylamide, and N-hydroxyethylacrylamide; amino-containing monomers such as aminoethyl (meth)acrylate, dimethylaminoethyl (meth)acrylate, and t-butylaminoethyl (meth)acrylate; glycidyl-containing monomers such as glycidyl (meth)acrylate and methylglycidyl (meth)acrylate; cyano-containing monomers such as acrylonitrile and methacrylonitrile; heterocycle-containing vinyl monomers such as N-vinyl-2-pyrrolidone, (meth)acryloylmorpholine, N-vinylpiperidone, N-vinylpiperazine, N-vinylpyrrole, and N-vinylimidazole; alkoxyalkyl (meth)acrylate monomers such as methoxyethyl (meth)acrylate and ethoxyethyl (meth)acrylate; sulfo-containing monomers such as sodium vinylsulfonate; phosphate-containing monomers such as 2-hydroxyethylacryloyl phosphate; imido-containing monomers such as cyclohexylmaleimide and isopropylmaleimide; and isocyanate-containing monomers such as 2-methacryloyloxyethyl isocyanate. Of these polar-group-containing monomers, carboxyl-containing monomers are preferred, of which acrylic acid is more preferred. Each of the polar-group-containing monomers may be used alone or in combination.

The content of the polar-group-containing monomer(s) is preferably from 1 to 30 percent by weight, and more preferably from 3 to 20 percent by weight, based on the total amount (100 parcent by weight) of monomer components constituting the acrylic polymer. The polar-group-containing monomer(s), when contained in a content of 1 percent by weight or more, may help the pressure-sensitive adhesive layer to have higher cohesive force. In contrast, the polar-group-containing monomer(s), when contained in a content of 30 percent by weight or less, may not cause the pressure-sensitive adhesive layer to have excessively high cohesive force, thus resulting in better tackiness.

The multifunctional monomers are exemplified by hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylates, polyester acrylates, and urethane acrylates.

The content of the multifunctional monomer(s) is preferably 0.5 percent by weight or less (e.g., from 0 to 0.5 percent by weight), and more preferably from 0 to 0.3 percent by weight, based on the total amount (100 parcent by weight) of monomer components constituting the acrylic polymer. The multifunctional monomer(s), when contained in a content of 0.5 percent by weight or less, may not cause the pressure-sensitive adhesive layer to have excessively high cohesive force, thus resulting in better tackiness. When a crosslinking agent is employed, such a multifunctional monomer does not have to be used. However, when a crosslinking agent is not employed, the multifunctional monomer(s) is used in a content of preferably from 0.001 to 0.5 percent by weight, and more preferably from 0.002 to 0.1 percent by weight.

Exemplary other copolymerizable monomers than the polar-group-containing monomers and the multifunctional monomers include (meth)acrylic esters having an alicyclic hydrocarbon group, such as cyclopentyl (meth)acrylate, cyclohexyl (meth)acrylate, and isobornyl (meth)acrylate; (meth)acrylic aryl esters such as phenyl (meth)acrylate; vinyl esters such as vinyl acetate and vinyl propionate; aromatic vinyl compounds such as styrene and vinyltoluene; olefins or dienes such as ethylene, butadiene, isoprene, and isobutylene; vinyl ethers such as vinyl alkyl ethers; and vinyl chloride.

The acrylic polymer may be prepared by polymerization of the monomer components according to a known or customary polymerization technique. Exemplary polymerization techniques include solution polymerization, emulsion polymerization, bulk polymerization, and polymerization upon irradiation with an active energy ray (active-energy-ray polymerization). Among them, solution polymerization and active-energy-ray polymerization are preferred, of which solution polymerization is more preferred, from the points typically of transparency, water resistance, and cost.

The solution polymerization may employ any of common solvents. Exemplary solvents herein include esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; ketones such as methyl ethyl ketone and methyl isobutyl ketone; and other organic solvents. Each of different solvents may be used alone or in combination.

A polymerization initiator and other agents for use in the polymerization of the acrylic polymer are not limited and may be chosen suitably from among known or customary ones. More specifically, exemplary preferred polymerization initiators include oil-soluble polymerization initiators including azo polymerization initiators such as 2,2'-azobisisobutyronitrile, 2,2'-azobis(4-methoxy-2,4-dimethylvaleronitrile), 2,2'-azobis(2,4-dimethylvaleronitrile), 2,2'-azobzs(2-methylbutyronitrile), 1,1'-azobis(cyclohexane-1-carbonitrile), 2,2"-azobis(2,4,4-trimethylpentane), and dimethyl-2,2'-azobis(2-methylpropionate); and peroxide polymerization initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, and 1,1-bis(t-butylperoxy)cyclododecane. Each of different polymerization initiators may be used alone or in combination. The amount of the polymerization initiator(s) is not limited, as long as falling in such a customary range as to be usable as a polymerization initiator.

The acrylic polymer has a weight-average molecular weight of preferably from 30x 10⁴ to 120x 10⁴, more preferably from 35x 10⁴ to 100x 10⁴, and furthermore preferably from 40x 10⁴ to 90x 10⁴. The acrylic polymer, when having a weight-average molecular weight of 30x 10⁴ or more, may help the pressure-sensitive adhesive layer to have more satisfactory tackiness. In contrast, the acrylic polymer, when having a weight-average molecular weight of 120x 10⁴ or less, may help the pressure-sensitive adhesive composition to have better coatability. The weight-average molecular weight of the acrylic polymer can be controlled typically by the type and amount of the polymerization initiator; and conditions in polymerization, such as temperature, time, monomer concentration, and monomer dropping rate.

The pressure-sensitive adhesive composition for the formation of the pressure-sensitive adhesive layer constituting the electroconductive pressure-sensitive adhesive tapes according to the present invention preferably contains a crosslinking agent. Such a crosslinking agent, when used, crosslinks the base polymer (e.g., acrylic polymer) constituting the pressure-sensitive adhesive layer and thereby helps the pressure-sensitive adhesive layer to have further higher cohesive force. The crosslinking agent is not limited and may be chosen suitably from among known or customary ones. Specifically, preferred crosslinking agents for use herein include multifunctional melamine compounds (melamine crosslinking agents), multifunctional epoxy compounds (epoxy crosslinking agents), and multifunctional isocyanate compounds (isocyanate crosslinking agents). Among them, isocyanate crosslinking agents and epoxy crosslinking agents are preferred, of which isocyanate crosslinking agents are more preferred. Each of different crosslinking agents may be used alone or in combination.

The isocyanate crosslinking agents are typified by lower aliphatic polyisocyanates such as 1,2-ethylene diisocyanate, 1,4-butylene diisocyanate, and 1,6-hexamethylene diisocyanate; alicyclic polyisocyanates such as cyclopentylene diisocyanate, cyclohexylene diisocyanate, isophorone diisocyanate, hydrogenated tolylene diisocyanate, and hydrogenated xylene diisocyanate; and aromatic polyisocyanates such as 2,4-tolylene diisocyanate, 2,6-tolylene diisocyanate, 4,4'-diphenylmethane diisocyanate, and xylylene diisocyanate. In addition, an adduct of tolylene diisocyanate with trimethylolpropane [trade name "CORONATE L" supplied by Nippon Polyurethane Industry Co., Ltd.] and an adduct of hexamethylene diisocyanate with trimethylolpropane [trade name "CORONATE HL" supplied by Nippon Polyurethane Industry Co., Ltd.] are also usable.

The epoxy crosslinking agents may be exemplified by N,N,N',N'-tetraglycidyl-m-xylenediamine, diglycidylaniline, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ethers, polypropylene glycol diglycidyl ethers, sorbitol polyglycidyl ethers, glycerol polyglycidyl ethers, pentaerythritol polyglycidyl ethers, polyglycerol polyglycidyl ethers, sorbitan polyglycidyl ethers, trimethylolpropane polyglycidyl ethers, diglycidyl adipate, o-diglycidyl phthalate, triglycidyl-tris(2-hydroxyethyl) isocyanurate, resorcinol diglycidyl ether, and bisphenol-S-diglycidyl ether. In addition, epoxy resins each having two or more epoxy groups per molecule are also usable, which are typified by commercial products such as the product available under the trade name "TETRAD C" from Mitsubishi Gas Chemical Company, Inc.

The content of the crosslinking agent(s) in the pressure-sensitive adhesive composition is not critical. However, when the pressure-sensitive adhesive composition is for the formation of the acrylic pressure-sensitive adhesive layer, the content is preferably from 0 to 5 parts by weight, and more preferably from 0 to 3 parts by weight, per 100 parts by weight of the acrylic polymer.

The pressure-sensitive adhesive composition may further contain any of known additives and solvents according to necessity. Exemplary additives include cross-linking promoters, tackifier resins (e.g., rosin derivatives, polyterpene resins, petroleum resins, and oil-soluble phenols), age inhibitors, fillers, colorants (e.g., pigments and dyestuffs), ultraviolet absorbers, antioxidants, chain-transfer agents, plasticizers, softeners, surfactants, and antistatic agents. The solvents herein include the solvents usable in the solution polymerization of the acrylic polymer.

The pressure-sensitive adhesive composition can be prepared by mixing an acrylic polymer (or acrylic polymer solution), a crosslinking agent, a solvent, and other additives.

Though not critical, the pressure-sensitive adhesive layer constituting the electroconductive pressure-sensitive adhesive tapes according to the present invention has a thickness of, for example, preferably from 10 to 80 µm, more preferably from 20 to 60 µm, and furthermore preferably from 20 to 50 µm. The pressure-sensitive adhesive layer, when having a thickness of 10 µm or more, may contribute to the dispersion of a stress generated during affixation and may protect the electroconductive pressure-sensitive adhesive tape from separation. In contrast, the pressure-sensitive adhesive layer, when having a thickness of 80 µm or less, may become advantageous for reduction in size and thickness of products. Particularly in the case of an electroconductive pressure-sensitive adhesive tape having a through-hole (electroconductive pressure-sensitive adhesive tape (a)), if the pressure-sensitive adhesive layer has an excessively large thickness, a fin(s) formed by boring the through-hole may sink down, namely, the fin(s) may collapse in such a direction as to clog the through-hole; and this may inhibit the metallic foil to be exposed from the surface of the tape on the pressure-sensitive adhesive layer side (this phenomenon is also referred to as "invasion by the pressure-sensitive adhesive layer") and may tend to prevent the terminal to have a later area. The pressure-sensitive adhesive layer, when having a thickness of 80 µm or less, may less cause the invasion by the pressure-sensitive adhesive layer, may efficiently help the terminal to have a larger area, and may help the tape to exhibit stable electrical conductivity.

Though not limited, the pressure-sensitive adhesive layer may be formed typically by a technique of applying the pressure-sensitive adhesive composition to a metallic foil or separator and, according to necessity, drying and/or curing the applied composition.

The coating (application) in the technique for forming the pressure-sensitive adhesive layer may employ a known coating procedure using a customary coater which is typified by a rotogravure roll coater, reverse roll coater, kiss-contact roll coater, dip roll coater, bar coater, knife coater, spray coater, comma coater, and direct coater.

In addition to the metallic foil and the pressure-sensitive adhesive layer, the electroconductive pressure-sensitive adhesive tapes according to the present invention may further have one or more other layers (e.g., intermediate layer and under coat) within a range not adversely affecting advantageous effects of the present invention.

Though not critical, the thickness of the electroconductive pressure-sensitive adhesive tape according to the present invention is preferably from 20 to 180 µm, more preferably from 40 to 140 µm, and furthermore preferably from 50 to 110 µm. The electroconductive pressure-sensitive adhesive tape, when having a thickness of 20 µm or more, may have a sufficient tape strength and exhibit better workability. In contrast, the electroconductive pressure-sensitive adhesive tape, when having a thickness of 180 µm or less, may be advantageous for reduction in thickness and/or size of products. The term "thickness of the electroconductive pressure-sensitive adhesive tape" refers to a thickness (distance) in the electroconductive pressure-sensitive adhesive tape from a metallic foil surface (of both sides of the metallic foil, one bearing no pressure-sensitive adhesive layer) to the adhesive face.

A separator (release liner) may be provided on the adhesive face in the electroconductive pressure-sensitive adhesive tapes according to the present invention. The separator is not limited, may be any of customary release papers, and is typified by base materials having a layer undergone a releasing treatment; low-adhesive base materials formed from fluorocarbon polymers; and low-adhesive base materials formed from nonpolar polymers. Examples of the base materials having a layer undergone a releasing treatment include plastic films and papers whose surface has been treated with a release agent such as a silicone release agent, a long-chain alkyl release agent, a fluorine-containing release agent, or molybdenum sulfide. Examples of the fluorocarbon polymers include polytetrafluoroethylenes, polychlorotrifluoroethylenes, poly(vinyl fluoride)s, poly(vinylidene fluoride)s, tetrafluoroethylene-hexafluoropropylene copolymers, and chlorofluoroethylene-vinylidene fluoride copolymers. Examples of the nonpolar polymers include olefinic resins such as polyethylenes and polypropylenes. Among them, a separator formed from a polyethylene or polypropylene is preferably used for suppressing a gap (pop-off) of the separator. The gap of the separator is a phenomenon in which the separator is partially peeled off from the adhesive face. The separator may be formed according to a known or customary procedure. The separator is not limited typically in thickness.

The electroconductive pressure-sensitive adhesive tape according to the present invention is not limited, as long as including a metallic foil and a pressure-sensitive adhesive layer present on one side of the metallic foil, and having a maximum resistance in the first cycle (initial resistance) and a resistance ratio as measured in the thermo-cycle test within the above-specified ranges. In an exemplary specific embodiment, the electroconductive pressure-sensitive adhesive tape is an electroconductive pressure-sensitive adhesive tape which has a metallic foil, a pressure-sensitive adhesive layer present on one side of the metallic foil, and a terminal or terminals exposed from a surface of the tape on the pressure-sensitive adhesive layer side, in which the total area of terminal or terminals present per 30 mm² of the pressure-sensitive adhesive layer (the surface of the electroconductive pressure-sensitive adhesive tape on the pressure-sensitive adhesive layer side) is controlled to be from 0.15 to 5 mm². Hereinafter this electroconductive pressure-sensitive adhesive tape according to the specific embodiment is referred to as an "electroconductive pressure-sensitive adhesive tape A."

As used herein the term "terminal" refers to a metal part (including the case where the surface of the metal part is oxidized) which is exposed from a surface of the electroconductive pressure-sensitive adhesive tape A on the pressure-sensitive adhesive layer side and which is in electrical conduction with the metallic foil in the electroconductive pressure-sensitive adhesive tape A. Specifically, the "terminal" refers to a metal part exposed when the electroconductive pressure-sensitive adhesive tape A is observed from the surface of the pressure-sensitive adhesive layer side.

When the electroconductive pressure-sensitive adhesive tape A having such terminal(s) is applied to an adherend, at least part of the terminal(s) is in contact with the adherend, and this ensures electrical conduction between the adherend and the metallic foil of the electroconductive pressure-sensitive adhesive tape A. Specifically, the terminal(s) helps the electroconductive pressure-sensitive adhesive tape A to exhibit electrical conductivity in the thickness direction. Above all, the terminal(s) is preferably a terminal(s) formed by part of the metallic foil constituting the electroconductive pressure-sensitive adhesive tape. This allows the electroconductive pressure-sensitive adhesive tape to exhibit stable electroconductivity in the thickness direction. Specifically, the terminal(s) is preferably a terminal(s) formed by allowing part of the metallic foil constituting the electroconductive pressure-sensitive adhesive tape to be exposed from a surface of the tape on the pressure-sensitive adhesive layer side.

The electroconductive pressure-sensitive adhesive tape A has a total area of terminals present per 30 mm² of the pressure-sensitive adhesive layer of from 0.15 to 5 mm², preferably from 0.3 to 5 mm², and more preferably from 0.4 to 5 mm². The total area of terminals is a total area of terminals present per 30 mm² of the surface of the tape on the pressure-sensitive adhesive layer side and hereinafter is also simply referred to as "total area of terminals." The electroconductive pressure-sensitive adhesive tape A, as having a total area of terminals of 0.15 mm² or more, may exhibit stable electrical conductivity, because the tape less suffers from abrupt increase in resistance with a decreased contact area between the terminal and the adherend (hereinafter also simply referred to as "contact area") upon use over a long duration and/or use in severe environments. In contrast, the electroconductive pressure-sensitive adhesive tape A, as having a total area of terminals of 5 mm² or less, may exhibit better tackiness to the adherend. As used herein the term "area of terminal(s)" refers to an area of a metal part (terminal) exposed when the surface of the electroconductive pressure-sensitive adhesive tape A on the pressure-sensitive adhesive layer side is observed from a direction perpendicular to the surface of the pressure-sensitive adhesive layer. Specifically, the term refers to a projected area of terminal(s) when the surface of the electroconductive pressure-sensitive adhesive tape on the pressure-sensitive adhesive layer side is observed from a direction perpendicular to the surface of the pressure-sensitive adhesive layer.

Though not limited, the total area of terminals may be determined typically by measuring respective areas (projected areas) of all terminals present per 30 mm² of the pressure-sensitive adhesive layer, and summing up the measured areas. More specifically, the total area of terminals may be measured according to the following method.

### [Method for Measurement of Total Area of Terminals]

A sample electroconductive pressure-sensitive adhesive tape is cut out to give a test portion with a size of 6 mm long by 5 mm wide (area: 30 mm²) .

A surface of the test portion on the pressure-sensitive adhesive layer side is observed with a digital microscope (product number "VHX-600" supplied by Keyence Corporation) at a 200-fold magnification (using "VH-Z20" lens), and a picture (image in the plane of projection) of a terminal is taken, which terminal is a metal part exposed from the surface of the test portion on the pressure-sensitive adhesive layer side. Next, a region of the terminal in the picture is specified in a measurement mode, the area of the region is measured, and thereby the area of the terminal is determined. Likewise, areas of all terminals present in the test portion are measured, summed up, and thereby give a total area of terminals present per 30 mm² of the pressure-sensitive adhesive layer.

More specifically, the total area of terminals may be measured according to a method described in "(2) Areas of Terminals" in after-mentioned (Evaluations.)

When the electroconductive pressure-sensitive adhesive tape has a tape width of less than 6 mm, the measurement of the total area of terminals may be performed by using a test portion cut out so as to give an area of the pressure-sensitive adhesive layer of 30 mm², or may be performed by using a test portion having an area of the pressure-sensitive adhesive layer of less than 30 mm² and converting the measured value to a value per 30 mm² of the pressure-sensitive adhesive layer.

The method for the measurement of the total area of terminals is not limited to one mentioned above and may also be, for example, a method of measuring areas (projected areas) of all terminals present per an arbitrary area (e.g., 100 cm²) of the pressure-sensitive adhesive layer, summing up the measured areas, and converting the total sum into a value per 30 mm² of the pressure-sensitive adhesive layer.

The way to form the terminal in the electroconductive pressure-sensitive adhesive tape A is not limited, but is exemplified by a method of embossing the tape from the metallic foil side to expose part of the metallic foil from a surface of the tape on the pressure-sensitive adhesive layer side and employing this as a terminal; or a method of boring a through-hole from the metallic foil side to form a fin or fins of the metallic foil on a surface of the tape on the pressure-sensitive adhesive layer side and employing this as a terminal. Among them, preferred is the method of boring a through-hole from the metallic foil side to form a fin or fins of the metallic foil on a surface of the tape on the pressure-sensitive adhesive layer side and employing this as a terminal. For allowing the electroconductive pressure-sensitive adhesive tape A to exhibit further stable electrical conductivity, more preferred is a method of boring a through-hole from the metallic foil side to form a fin or fins of the metallic foil on a surface of the tape on the pressure-sensitive adhesive layer side, folding back the fin or fins, and employing this as a terminal. Specifically, the terminal or terminals in the electroconductive pressure-sensitive adhesive tape A are preferably a terminal or terminals each formed by boring a through-hole from the metallic foil side to form a fin or fins of the metallic foil on a surface of the tape on the pressure-sensitive adhesive layer side, and folding back the fin or fins. Terminals are preferably formed by this method, because this allows easy control of the total area of terminals present per 30 mm² of the pressure-sensitive adhesive layer within the above-specified range.

An electroconductive pressure-sensitive adhesive tape may be prepared by the aforementioned method of boring a through-hole from the metallic foil side to form a fin(s) on the surface of the tape on the pressure-sensitive adhesive layer side, folding back the fin(s), and employing this as a terminal. This electroconductive pressure-sensitive adhesive tape is hereinafter referred to as an "electroconductive pressure-sensitive adhesive tape (a)." Specifically, the electroconductive pressure-sensitive adhesive tape (a) is an electroconductive pressure-sensitive adhesive tape having a terminal formed by boring a through-hole from the metallic foil side to form a fin(s) on the surface of the tape on the pressure-sensitive adhesive layer side, and folding back the fin(s). The electroconductive pressure-sensitive adhesive tape (a) will be illustrated in detail below. It should be noted, however, that this is never intended to limit the scope of the present invention. As used herein the term "fin" refers to a metallic foil which sticks up at the surface of the tape on the pressure-sensitive adhesive layer side as a result of boring of the through-hole, and is also referred to as a "burr." Also as used herein the phrase "folding back the fin(s)" means that the fin(s) is folded or bent so that the metallic foil constituting the fin(s) is exposed from a surface of the tape on the pressure-sensitive adhesive layer side.

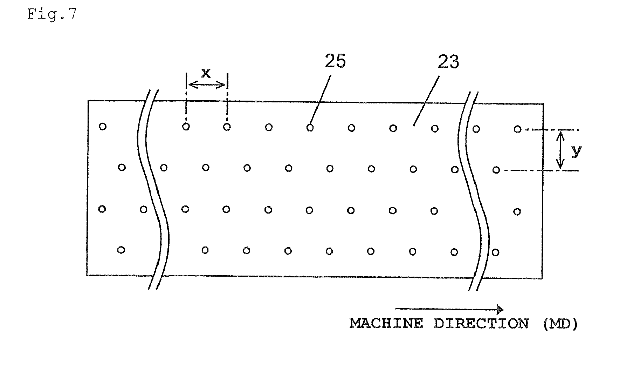

The electroconductive pressure-sensitive adhesive tape
(a) is a single-coated pressure-sensitive adhesive tape which has a metallic foil; and a pressure-sensitive adhesive layer present on one side of the metallic foil, and has at least one hole (through-hole) penetrating the metallic foil and the pressure-sensitive adhesive layer, in which part of the metallic foil is exposed via the through-hole from a surface of the tape on the pressure-sensitive adhesive layer side and serves as a terminal. The electroconductive pressure-sensitive adhesive tape (a), as having the terminal, ensures electrical conductivity (electrical conductivity in the thickness direction) between the metallic foil and the face to be affixed to the adherend. Fig. 6 and Fig. 7 are schematic views illustrating exemplary structures (arrangements) of the electroconductive pressure-sensitive adhesive tape (a). Fig. 6 is a schematic view (cross-sectional view at the terminal)) of the electroconductive pressure-sensitive adhesive tape (a). With reference to Fig. 6, an electroconductive pressure-sensitive adhesive tape 23 has a metallic foil 21 and, on one side thereof, a pressure-sensitive adhesive layer 22. A through-hole 25 is provided in the metallic foil 21 and the pressure-sensitive adhesive layer 22, and part of the metallic foil 21 is exposed via the through-hole 25 from a surface of the tape on the pressure-sensitive adhesive layer side to thereby form a terminal 24. Thus, the through-hole 25 and the terminal 24 in the electroconductive pressure-sensitive adhesive tape (a) form a conducting part 26 which allows an electric current to pass through between the metallic foil 21 and the terminal 24.

Fig. 7 is a schematic view (plan view) illustrating an embodiment of the electroconductive pressure-sensitive adhesive tape (a). Through-holes 25 in Fig. 7 are arranged in a locational pattern of so-called "scatter pattern." Such scatter pattern may be formed typically by aligning points (through-holes) at a spacing of "y" to form rows, the rows each having an arrangement spacing of the points of "x" in a machine direction (longitudinal direction); and arranging the rows so that pins in one row are located at positions deviating from the positions of pins in an adjacent row each by one-half of "x." Though not critical, the arrangement spacing "x" is typically preferably from 1 to 5 mm and more preferably from 2 to 4 mm. Also though not critical, the spacing "y" is typically preferably from 1 to 4 mm and more preferably from 2 to 3 mm.

Though not critical, the electroconductive pressure-sensitive adhesive tape (a) has a number (density) of through-holes present per 30 mm² of the pressure-sensitive adhesive layer (number of through-holes present per 30 mm² of the surface of the tape on the pressure-sensitive adhesive layer side of, for example, preferably from 3 to 10 per 30 mm², and more preferably from 3 to 6 per 30 mm². The electroconductive pressure-sensitive adhesive tape (a), when having a number of through-holes of 3 or more per 30 mm², may have a larger number of contact points of terminals with respect to the adherend. Thus, the electroconductive pressure-sensitive adhesive tape may maintain sufficient contact points, thereby ensure electrical conduction, and less suffer from abrupt increase in resistance even when the respective contact areas of the terminals are decreased due to use over a long duration and/or use under severe environmental conditions. In contrast, the electroconductive pressure-sensitive adhesive tape, when having a number of through-holes of 10 or less per 30 mm², may maintain a sufficient strength and exhibit better workability.

Though not limited, the number (density) of the through-holes may be measured typically by counting through-holes present per an arbitrary area (e.g., 30 mm² or 100 cm²) of the pressure-sensitive adhesive layer visually or typically with a digital microscope; and, where necessary, converting the measured number into a number per 30 mm² of the pressure-sensitive adhesive layer.

The electroconductive pressure-sensitive adhesive tape (a) has an average area of terminals per one through-hole (hereinafter also simply referred to as "average terminal area") of preferably from 50,000 to 500,000 µm², more preferably from 100,000 to 400,000 µm², and furthermore preferably from 100,000 to 300,000 µm². The electroconductive pressure-sensitive adhesive tape (a), when having an average terminal area of 50,000 µm² or more, may have a larger contact area of terminals with respect to the adherend, may thereby maintain a contact area sufficient for ensuring electrical conductivity, and can exhibit stable electrical conductivity, even when the contact area is decreased as a result of use over a long duration and/or use under severe environmental conditions. In contrast, the electroconductive pressure-sensitive adhesive tape (a), when having an average terminal area of 500,000 µm² or less, may not suffer from excessively large through-holes and can thereby maintain a sufficient strength to exhibit better workability.

Though not limited, the average terminal area may be determined typically by measuring respective projected areas of all terminals present per 30 mm² of the pressure-sensitive adhesive layer; summing up the measured areas to give a total area (total area of terminals present per 30 mm² of the pressure-sensitive adhesive layer); and dividing the total area of terminals by the number of through-holes present per 30 mm² of the pressure-sensitive adhesive layer. More specifically, the average terminal area may be measured, for example, according to the following method.

### [Method for Measurement of Average Terminal Area]

A sample electroconductive pressure-sensitive adhesive tape is cut out to give a test portion having a size of 6 mm long by 5 mm wide (area: 30 mm²).
A surface of the test portion on the pressure-sensitive adhesive layer side is observed with a digital microscope (product number "VHX-600" supplied by Keyence Corporation) at a 200-fold measurement magnification (using "VH-Z20" lens), and a picture (image in the plane of production) of a terminal is taken, which terminal is a metal part exposed from the surface of the tape on the pressure-sensitive adhesive layer side. Next, a region of the terminal in the picture is specified in a measurement mode, the area of the region is measured, and thereby the area of the terminal is determined. In this manner, respective areas of all terminals present in the test portion are measured and summed up to determine a total area of terminals present per 30 mm² of the pressure-sensitive adhesive layer.
The average terminal area per one through-hole may be determined by dividing the above-measured total area of terminals by the number of through-holes present in the test portion, which number may be counted visually or typically with a digital microscope.
When the electroconductive pressure-sensitive adhesive tape has a tape width of less than 6 mm, for example, the measurement may be performed by cutting out a test portion so as to give an area of the pressure-sensitive adhesive layer of 30 mm²; or may be performed by using a test portion having an area of the pressure-sensitive adhesive layer of less than 30 mm² to give a value and converting the measured value into a value per 30 mm² of the pressure-sensitive adhesive layer.
More specifically, the average terminal area may be measured according to a method described in "(2) Areas of Terminals" in after-mentioned "Evaluations."

The method for the measurement of an average terminal area is not limited to one mentioned above and may also be, for example, a method of measuring respective areas (projected areas) of all terminals present per an arbitrary area (e.g., 100 cm²) of the pressure-sensitive adhesive layer, summing up the measured areas, and dividing the total sum by the number of through-holes present per the pressure-sensitive adhesive layer (per the arbitrary area of the pressure-sensitive adhesive layer).

The metallic foil constituting the electroconductive pressure-sensitive adhesive tape (a) is preferably any of those exemplified above. The thickness of the metallic foil is also preferably controlled within the above-specified range. As used herein the term "thickness of the metallic foil" in the electroconductive pressure-sensitive adhesive tape (a) refers to a thickness of the metallic foil in a region of the electroconductive pressure-sensitive adhesive tape (a) where no terminal is formed.

The pressure-sensitive adhesive layer constituting the electroconductive pressure-sensitive adhesive tape (a) is preferably any of those exemplified above. The thickness of the pressure-sensitive adhesive layer is also preferably controlled within the above-specified range. As used herein the term "thickness of the pressure-sensitive adhesive layer" in the electroconductive pressure-sensitive adhesive tape (a) refers to a thickness of the pressure-sensitive adhesive layer in a region of the electroconductive pressure-sensitive adhesive tape (a) where no terminal is formed.

The electroconductive pressure-sensitive adhesive tape (a) has a ratio of the thickness of the pressure-sensitive adhesive layer to the thickness of metallic foil [(thickness of the pressure-sensitive adhesive layer)/(thickness of the metallic foil )] of preferably from 0.1 to 10, more preferably from 0.2 to 9, and furthermore preferably from 0.3 to 8. The electroconductive pressure-sensitive adhesive tape (a), when having a ratio of the thickness of the pressure-sensitive adhesive layer to the thickness of metallic foil of 0.1 or more, may exhibit a sufficient bond strength against the rigidity of the substrate (metallic foil). In contrast, the electroconductive pressure-sensitive adhesive tape (a), when having a ratio of the thickness of the pressure-sensitive adhesive layer to the thickness of metallic foil of 10 or less, may less suffer from the invasion by the pressure-sensitive adhesive layer and may thereby have larger areas of terminals.

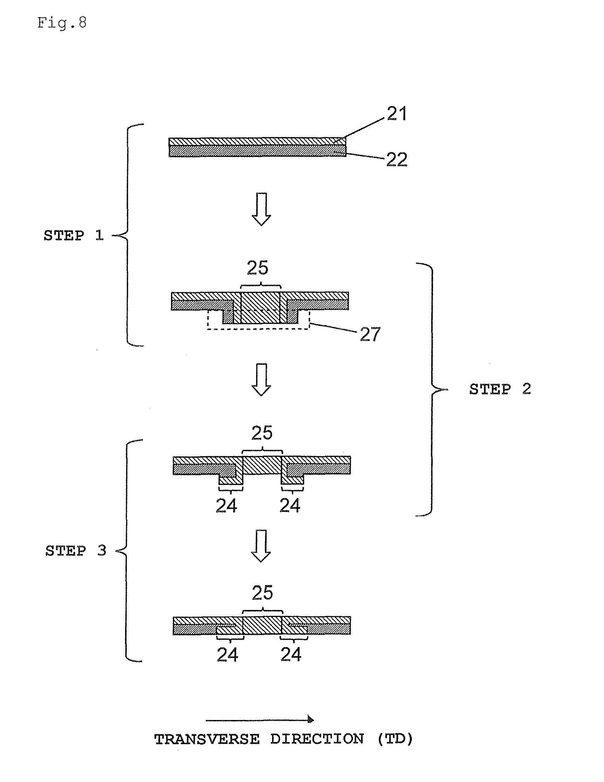

Specific examples of a production method of the electroconductive pressure-sensitive adhesive tape (a) include, but are not limited to, a production method including at least the step of boring a through-hole in a laminate having a metallic foil and, on one side thereof, a pressure-sensitive adhesive layer, the boring being performed from the metallic foil side, to form a fin or fins of the metallic foil in the surface of the tape on the pressure-sensitive adhesive layer side (this step is also referred to as "Step 1"); and the step of folding back the fin or fins (this step is also referred to as "Step 2"). Where necessary, the production method may further include the step of performing press working (this step is hereinafter also referred to as "Step 3") after Step 2. Fig. 8 is a schematic view illustrating an embodiment of the production method of the electroconductive pressure-sensitive adhesive tape (a). In Fig. 8, the reference sign 21 stands for a metallic foil; 22 stands for a pressure-sensitive adhesive layer; 25 stands for a through-hole; 27 stands for a fin; and 24 stands for a terminal.

Though not limited, the laminate having a metallic foil and, on one side thereof, a pressure-sensitive adhesive layer may be prepared by forming a pressure-sensitive adhesive layer on one side of a metallic foil, or may employ a commercially available product. The step of forming a pressure-sensitive adhesive layer on one side of a metallic foil may be performed separately from the production of the electroconductive pressure-sensitive adhesive tape (a), or may be performed as a series (namely, in-line) of the production steps of the electroconductive pressure-sensitive adhesive tape (a). The way to form a pressure-sensitive adhesive layer on one side of a metallic foil in the preparation of the laminate is not limited and may employ any of known or customary methods for forming pressure-sensitive adhesive layers. Typically, the aforementioned method for forming the pressure-sensitive adhesive layer may be employed. In such a forming method, the pressure-sensitive adhesive layer may be directly formed on a surface of the metallic foil (direct process); or may be formed by forming a pressure-sensitive adhesive layer on a separator and transferring (applying) the formed pressure-sensitive adhesive layer to the metallic foil to thereby form the pressure-sensitive adhesive layer on a surface of the metallic foil (transfer process).

### [Step 1]

In Step 1, a through-hole is bored in a laminate having a metallic foil and, on one side thereof, a pressure-sensitive adhesive layer from the metallic foil side to form a fin or fins of the metallic foil on a surface of the laminate on the pressure-sensitive adhesive layer side. The way to bore the through-hole is not limited and may be any of boring or perforating methods. Among them, preferred is a method for forming a through-hole(s) using a positive die having, on its surface, a pin(s) for the formation of through-hole(s). This method is preferred for the formation of uniform through-holes.

The shape of the pin(s) is not limited, as long as being a protruded shape capable of forming a through-hole, and examples thereof include shapes of circular cone; pyramids (multiangular pyramids) such as triangular pyramid and quadrangular pyramid; circular cylinder; prisms (multiangular prisms) such as triangular prism and quadrangular prism; and shapes analogous to them. Among such shapes, the pin(s) preferably has a pyramid shape for the formation of uniform through-holes.

The arrangement of the pins in the positive die is not limited and may suitably selected according to the arrangement of through-holes to be formed in the electroconductive pressure-sensitive adhesive tape (a). Typically, the spacing of pins corresponding to the machine direction (MD; longitudinal direction) of the electroconductive pressure-sensitive adhesive tape (a) is preferably from 1 to 5 mm, and more preferably from 2 to 4 mm. The spacing of pins corresponding to the transverse direction (TD; width direction) of the electroconductive pressure-sensitive adhesive tape is preferably from 1 to 4 mm, and more preferably from 2 to 3 mm. The locational pattern of the pins is also not limited, but the pins may be arranged in a scatter pattern typically as in the locational pattern of through-holes in the electroconductive pressure-sensitive adhesive tape (a) illustrated in Fig. 7.

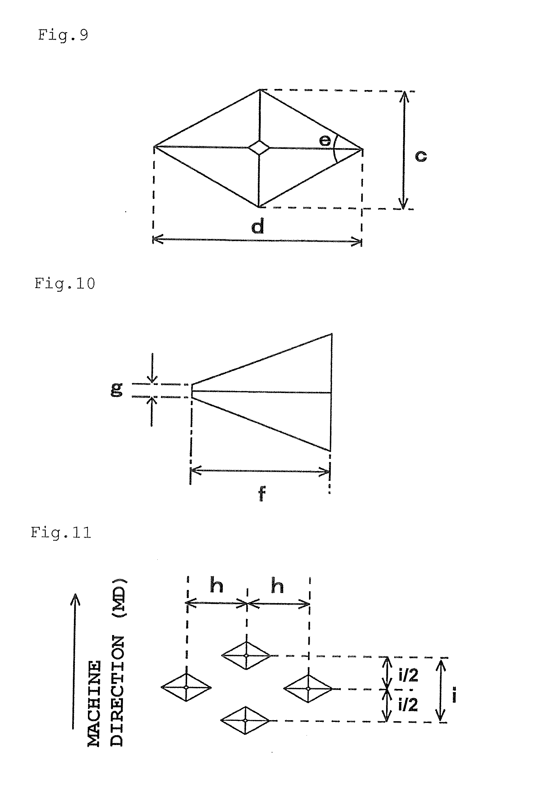

More specifically, an exemplary positive die usable in the formation of the through-holes is a positive die which has rhombic quadrangular pyramidal pins as illustrated in Figs. 9 and 10, in which the pins are arranged in a locational pattern illustrated in Fig. 11. The locational pattern is a scatter pattern, in which the pins are aligned at an arrangement spacing of "i" in the longitudinal direction (machine direction of the electroconductive pressure-sensitive adhesive tape) to form rows of pins, and the rows of pins are arranged at a spacing "h" so that pins in a row are located at positions deviating from the positions of pins in an adjacent row each by one-half of "i." Such pins usable herein preferably have dimensions as follows. In the (rhombic) base of the pins illustrated in Fig. 9, the dimension "c" in Fig. 9 is preferably from 0.5 to 3 mm and more preferably from 0.5 to 2 mm; and the dimension "d" in Fig. 9 is preferably from 0.5 to 3 mm and more preferably from 0.5 to 2 mm. The angle "e" in the base in Fig. 9 is typically preferably from 30° to 120° and more preferably from 40° to 100°.
The dimension "f" (pin height) in Fig. 10 is typically preferably from 0.5 to 3 mm and more preferably from 1 to 2 mm; and the dimension "g" in Fig. 10 is typically preferably from 0.01 to 0.5 mm and more preferably from 0.02 to 0.4 mm.
The spacing "i" in Fig. 11 is typically preferably from 1 to 5 mm and more preferably from 2 to 4 mm. The spacing "h" in Fig. 11 is typically preferably from 1 to 4 mm and more preferably from 2 to 3 mm.

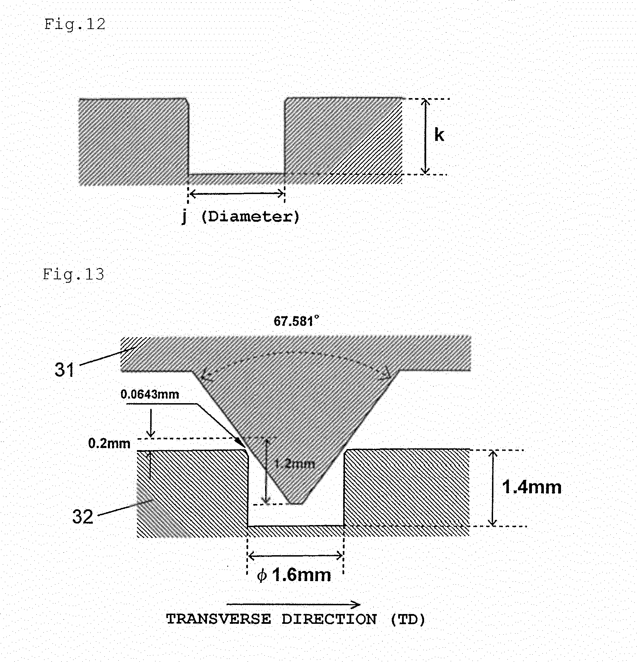

Though not limited, the formation of through-holes using the positive die is performed preferably in combination with a negative die having concavities corresponding to the shapes of pins of the positive die. The negative die, when used, may help to form fins to be folded more easily and may thereby help the electroconductive pressure-sensitive adhesive tape (a) to have larger areas of terminals. The shape and size (dimensions) of the concavities of the negative die are not limited and may be chosen according to the shape and size of the pins of the positive die. Specifically, the concavities may be cylindrical concavities each having a profile illustrated in Fig. 12. Though not critical, the cylindrical concavity illustrated in Fig. 12 may have dimensions such that the dimension "j" (diameter of the base) in Fig. 12 is typically from 0.5 to 3 mm; and the dimension "k" (depth) is typically from 0.5 to 3 mm.

Fig. 13 depicts an exemplary arrangement of a pin and a cylindrical concavity upon punching using a positive die 31 having the pins illustrated in Figs. 9 and 10, and a negative die 32 having the cylindrical concavities illustrated in Fig. 12.

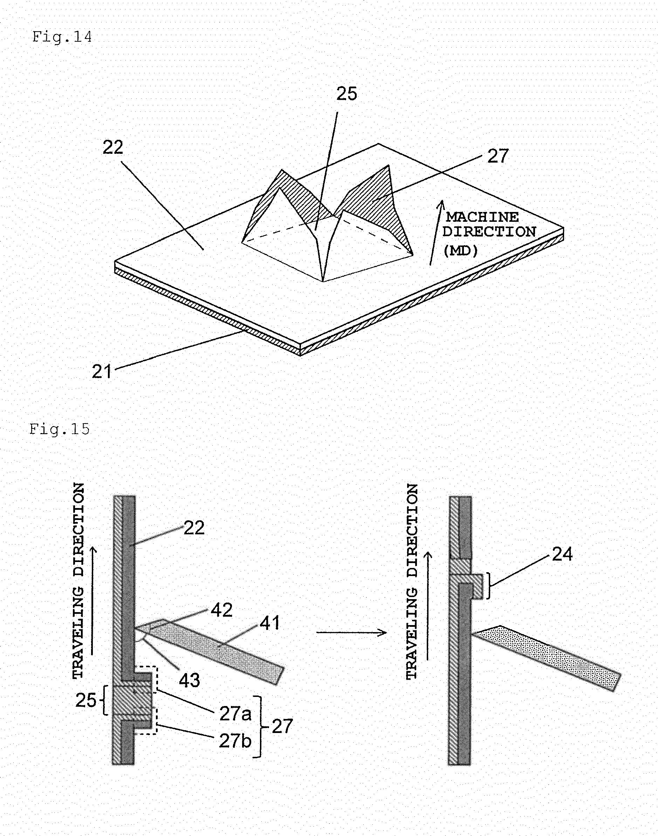

Fig. 14 is a schematic view illustrating shapes of a through-hole and fins formed through punching according to an embodiment using a positive die having the above-exemplified rhombic quadrangular pyramidal pins and a negative die having the cylindrical concavities. In this embodiment, each through-hole has a rhombic shape, and four fins are formed per one through-hole.

A specific example of a technique for forming through-holes by punching using a positive die having the pins is a technique of allowing a laminate having a metallic foil and, present on one side thereof, a pressure-sensitive adhesive layer to pass through between a roll having pins on the surface thereof in a desired arrangement (hereinafter also referred to as a "positive-die roll") and a roll having concavities (holes or trenches) on the surface thereof (hereinafter also referred to as a "negative-die roll") so that the metallic foil side of the laminate is brought into contact with the positive-die roll.

[Step 2]
In Step 2, the fins (fins formed in Step 1) are folded back to form terminals. The fins, as being folded back, contribute to larger areas of the terminals. Though not limited, the fins are preferably folded back by a process using a squeegee so as to allow the terminals to have larger areas effectively. A squeegee, when used, folds back fins in a large number in one step and, in addition, folds back them tidily. This allows the electroconductive pressure-sensitive adhesive tape (a) to have a larger area of the metallic foil exposed from the surface of the tape on the pressure-sensitive adhesive layer side, namely, to have larger areas of terminals. In particular, this allows the electroconductive pressure-sensitive adhesive tape (a) to readily have a larger average terminal area per one through-hole and to thereby efficiently have a larger total area of terminals per 30 mm² of the pressure-sensitive adhesive layer.

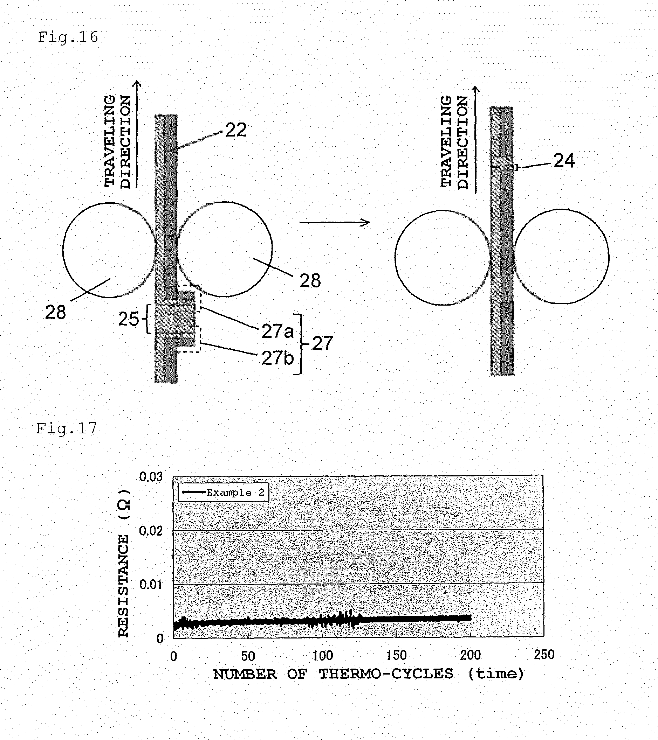

Fig. 15 depicts a schematic view illustrating an embodiment of the production method of the electroconductive pressure-sensitive adhesive tape (a) in which fins are folded back using a squeegee to form terminals. The term "traveling direction" in Fig. 15 refers to a traveling direction of the laminate, which has through-holes and fins obtained in Step 1; and the same is also applied to Fig. 16. With reference to Fig. 15, a squeegee 41 and the laminate are arranged so that the edge of the squeegee 41 faces the surface of the pressure-sensitive adhesive layer 22 of the laminate, in which the laminate has through-holes 25 and fins 27 obtained in Step 1. Then the pressure-sensitive adhesive layer 22 is moved with respect to the squeegee 41, and whereby the edge of the squeegee 41 folds back the fins 27. In this case, of the fins 27, a fin 27a positioned ahead with respect to the through-hole 25 in the traveling direction of the laminate is generally folded back in such a direction to clog the through-hole 25. Thus, the metallic foil of the fin 27a is not exposed from the pressure-sensitive adhesive layer side surface and does not form a terminal. In contrast, a fin 27b positioned behind with respect to the through-hole 25 in the traveling direction of the laminate is folded back in a such a direction as not to clog the through-hole 25. Thus, the metallic foil of the fin 27b is exposed from the surface of the laminate on the pressure-sensitive adhesive layer side. Namely, the fin 27b forms a terminal 24. As is described above, the folding back of fins using a squeegee allows the electroconductive pressure-sensitive adhesive tape (a) to have a larger terminal area per one through-hole efficiently.

Fig. 16 depicts a schematic view illustrating an exemplary formation of terminals in a customary electroconductive pressure-sensitive adhesive tape. According to such a customary method, the terminals in the customary electroconductive pressure-sensitive adhesive tape are formed by flattening fins 27 of a laminate using press rolls 28 as illustrated in Fig. 16, in which the laminate has a through-hole 25 and the fins 27. In this case, of the fins 27, a fin 27a positioned ahead with respect to the through-hole 25 in the traveling direction of the laminate is generally flattened so that the pressure-sensitive adhesive layer covers the metallic foil of the fin 27a. Thus, the metallic foil of the fin 27a is exposed little from the surface of the pressure-sensitive adhesive layer. In contrast, a fin 27b positioned behind with respect to the through-hole 25 in the traveling direction of the laminate is folded back so as to allow the metallic foil to be exposed from the surface of the laminated on the pressure-sensitive adhesive layer side but is simultaneously flattened by the action of the press rolls. Thus, most of the metallic foil of the fin 27b is covered by the pressure-sensitive adhesive layer and, as a result, only a small region of the metallic foil is exposed from the surface of the pressure-sensitive adhesive layer side. As is described above, the customary production method fails to provide a large terminal area per one through-hole and thereby gives an electroconductive pressure-sensitive adhesive tape, in which the total area of terminals present per 30 mm² of the pressure-sensitive adhesive layer is not controllable within the above-specified range. Thus, the tape fails to exhibit stable electrical conductivity.

A material of the squeegee is not limited, may be any of known or customary ones, and is typified by iron and stainless steels. Among them, the squeegee is preferably made of iron for satisfactory rigidity.

The squeegee is not limited in shape and may be any of squeegees with known or customary shapes. Among them, preferred is a squeegee illustrated in Fig. 15, which has a trapezoid cross section and a sharp edge (so-called sword squeegee), because a squeegee of this type enables easy folding back of fins.

Typically, when the sword squeegee is used as the squeegee, it has an edge angle (knife angle) of preferably from 10° to 80° and more preferably from 20° to 60°; and has an edge radius (edge R) of preferably from 0.1 to 1 and more preferably from 0.2 to 0.8. As used herein the term "edge angle" refers to an angle of the edge in a profile of the single-beveled squeegee and refers to, for example, an angle 42 in Fig. 15.

Though not limited, the folding back of the fins is preferably performed so that the edge (cutting edge) of the squeegee is brought into complete (full) contact with the surface of the pressure-sensitive adhesive layer. The squeegee, when its edge is brought into complete contact with the surface of the pressure-sensitive adhesive layer, can fold back the fins from the root and thereby helps the electroconductive pressure-sensitive adhesive tape (a) to have larger areas of terminals efficiently.

Though not critical, an angle formed between the surface of the pressure-sensitive adhesive layer and the edge of the squeegee upon folding back of the fins is preferably from 30° to 80° and more preferably from 40° to 80°. As used herein the term "angle formed between the surface of the pressure-sensitive adhesive layer and the edge of the squeegee" refers to, for example, an angle 43 in Fig. 15. The fins, when folded back at the angle of 30° or more, can be folded back from the root, and this may help the electroconductive pressure-sensitive adhesive tape to have larger areas of terminals efficiently. The fins, when folded back at the angle of less than 30°, may be folded back insufficiently and may not help the electroconductive pressure-sensitive adhesive tape to have sufficiently large areas of terminals, because the edge of the squeegee may stroke and slip over the front end of the fin. In contrast, the fins, when folded back at the angle of 80° or less, may not cause breakage of the double-coated pressure-sensitive adhesive tape, which breakage may occur upon folding back of the fins.

Though not critical, the moving rate (speed) of the pressure-sensitive adhesive layer (laminate) with respect to the squeegee upon folding back of the fins is typically preferably from 1 to 20 m/minute and more preferably from 2 to 10 m/minute. The moving, when performed at a rate of 1 m/minute or more, may contribute to higher productivity. In contrast, the moving, when performed at a rate of 20 m/minute or less, may help the squeegee to fold back the fins stably. Upon folding back of the fins, the pressure-sensitive adhesive layer (laminate) may be moved with respect to the squeegee, or the squeegee may be moved with respect to the pressure-sensitive adhesive layer (laminate). The rate of the squeegee to be moved with respect to the pressure-sensitive adhesive layer (laminate) also preferably falls within the above-specified range.

### [Step 3]

The fins folded back in Step 2 are subjected to press working according to necessity in Step 3. Step 3, when performed, smoothes the surfaces of the terminals and the pressure-sensitive adhesive layer, and this may help the terminals to come into contact with the adherend more easily and may help the electroconductive pressure-sensitive adhesive tape to have higher adhesiveness to the adherend.

The process of the press working is not limited and may be any of known or customary processes, which are typified by press working processes using rolls or a single plate. Among them, press working using a roll pressing machine is preferred for better productivity. The pressure-sensitive adhesive layer is preferably protected with a separator during such press working.

Where necessary, the production method of the electroconductive pressure-sensitive adhesive tape (a) may further include any of additional steps subsequent to Step 2 or Step 3, which are typified by the step of slitting the electroconductive pressure-sensitive adhesive tape to a suitable product width; and the step of winding the electroconductive pressure-sensitive adhesive sheet as a roll.

In the embodiment of the electroconductive pressure-sensitive adhesive tape according to the present invention, the total area of terminals present per 30 mm² of the surface of the pressure-sensitive adhesive layer is controlled within the range of from 0.1 to 5.0 mm². Thus, the resistance ratio as measured in the thermo-cycle test is controlled to 5 times or less, and the electroconductive pressure-sensitive adhesive tape exhibits stable electrical conductivity upon use over a long duration and/or use in severe environments. This is probably mainly for the following reasons (1) and (2). (1) By increasing an area of each terminal, namely, by increasing the average terminal area per one through-hole, the electroconductive pressure-sensitive adhesive tape can maintain a contact area sufficient to ensure electrical conduction even when the contact area is somewhat decreased as a result of use over a long duration and/or use in severe environments. (2) By increasing the number of terminals present per unit area of the pressure-sensitive adhesive layer, the electroconductive pressure-sensitive adhesive tape can maintain contact points in a number sufficient to ensure electrical conduction even when the contact area is decreased as a result of use over a long duration and/or use in severe environments. Particularly in the embodiment of the present invention, a squeegee is used for the formation of terminals. This enables the formation of terminals having such sizes (areas) that cannot be achieved by the customary production method, namely, enables the effect described in (1). Thus, an electroconductive pressure-sensitive adhesive tape having a total area of terminals controlled within the above-specified range can be efficiently obtained.

In contrast, the customary electroconductive pressure-sensitive adhesive tapes fail to have a large area of each terminal, specifically, fail to have an average terminal area per one through-hole of 50,000 µm² or more. In addition, the customary electroconductive pressure-sensitive adhesive tapes fail to control the total area of terminals present per 30 mm² of the pressure-sensitive adhesive layer to the range of from 0.15 to 5.0 mm². This is typically because, if the tapes are to have a large total area of terminals by increasing the number of terminals, an extremely large number of through-holes should be provided, and this causes the electroconductive pressure-sensitive adhesive tapes to have a remarkably low strength and remarkably inferior tackiness. Accordingly, the customary electroconductive pressure-sensitive adhesive tapes suffer from a gradually increasing resistance and thereby fail to exhibit stable electrical conductivity, because the contact area between the adherend and the terminals is reduced to such an extent as to impede conduction when they are used over a long duration and/or used in severe environments. The reduction in contact area between the adherend and the terminals is a phenomenon which is caused probably in the following manner. Specifically, fine bubbles are formed (or trapped) in the pressure-sensitive adhesive layer during production of the electroconductive pressure-sensitive adhesive tapes or upon affixation of the tapes to the adherend; bubbles present in the vicinity of the terminals repeatedly expand and shrink due typically to the change in ambient temperature, and this causes a stress on the contact face between the adherend and the terminals to cause the reduction in contact area.

The electroconductive pressure-sensitive adhesive tapes according to embodiments of the present invention are advantageously used typically for establishing electrical conduction between two points separated from each other; and for electromagnetic shielding in electric/electronic appliances and cables. They are particularly advantageously usable in applications where such tapes should exhibit stable electrical conductivity without increase in resistance upon use in various environments and/or upon use over a long duration. Examples of such applications include grounding of printed circuit boards; grounding of external shielding cases of electronic appliances; earthing for static protection; and internal wiring of power supplies and electronic appliances which are typified by display devices such as liquid crystal display devices, organic electroluminescence (EL) display devices, plasma display panels (PDPs), and electronic papers; and solar cells.

### EXAMPLES

The present invention will be illustrated in further detail with reference to several working examples below. It should be noted, however, that these examples are never construed to limit the scope of the present invention.

### Production Example of Acrylic Polymer

In a separable flask were placed 97 parts by weight of n-butyl acrylate (BA) and 3 parts by weight of acrylic acid (AA) as monomer components, 0.2 part by weight of 2,2'-azobisisobutyronitrile as a polymerization initiator, and 27 parts by weight of toluene as a polymerization solvent, followed by stirring for one hour while introducing nitrogen gas. After removing oxygen in the polymerization system in this manner, the temperature was raised to 63°C, the mixture was reacted for 10 hours, the concentration of the reaction mixture was adjusted by further adding toluene, and thereby yielded an acrylic polymer solution having a solids concentration of 30 percent by weight. The acrylic polymer in the acrylic polymer solution had a weight-average molecular weight of 50x 10⁴.

### Preparation Example of Pressure-sensitive Adhesive Composition Solution

A pressure-sensitive adhesive composition solution was prepared by adding an isocyanate crosslinking agent (trade name "CORONATE L" supplied by Nippon Polyurethane Industry Co., Ltd.) to the above-obtained acrylic polymer solution in an amount of 2 parts by weight (in terms of solids content) per 100 parts by weight (solids content) of the acrylic polymer.

### Production Example of Tack Tape For Electroconductive Pressure-sensitive Adhesive Tape

A roll of a tack tape for electroconductive pressure-sensitive adhesive tape was obtained by applying the pressure-sensitive adhesive composition solution to a silicone-coated release paper so as to have a dry thickness of 45 µm, drying this in an oven at 130°C for 3 minutes, applying a tin-coated copper foil (copper foil bearing a tin plating and having a thickness of 35 µm) to the surface of the resulting pressure-sensitive adhesive layer, and winding this as a roll. The resulting roll had a structure of "(tin-coated copper foil)/(pressure-sensitive adhesive layer) / (release paper) ."

### EXAMPLE 1

The tack tape for electroconductive pressure-sensitive adhesive tape was dispensed from the above-prepared roll and punched by passing through between a positive-die roll and a negative-die roll so that the metallic foil side of the tack tape for electroconductive pressure-sensitive adhesive tape come in contact with the positive-die roll. Thus, there were formed through-holes and, on the surface of the tack tape on the pressure-sensitive adhesive layer side, fins (burrs) of the metallic foil. The positive-die roll bears, on its surface, pins each having the shape illustrated in Figs. 9 and 10 (where "c" = 1.0427 mm, "d" = 1.8061 mm, "e" = 60°, "f" = 1.2 mm, and "g" = 0.1 mm) and being arranged in the pattern illustrated in Fig. 11 (where "h" = 2.598 mm and "i" = 1.5 mm). The negative-die roll has, in its surface, cylindrical concavities illustrated in Fig. 12 each having a diameter of 1.6 mm and a depth of 1.4 mm.
Next, the release paper was removed, and a squeegee (material: iron (FK4), edge angle: 45°, edge R (edge radius): 0.5) and the electroconductive pressure-sensitive adhesive tape were arranged as illustrated in Fig. 15 so that an angle (the angle 43 in Fig. 15) formed between the surface of the pressure-sensitive adhesive layer and the edge of the squeegee be 20° and so that the surface of the pressure-sensitive adhesive layer be in contact with the edge of the squeegee (namely, the edge of the squeegee be held against the surface of the pressure-sensitive adhesive layer). Then the pressure-sensitive adhesive layer was moved (slid) at a rate of 1 m/minute, and the fins were thereby folded back.
Next, a separator was applied to the surface of the pressure-sensitive adhesive layer, and the article was allowed to pass through between press rolls to thereby simultaneously perform lamination of the separator and press working on the article to smoothen the folded-back fins and the pressure-sensitive adhesive layer. Thus, an electroconductive pressure-sensitive adhesive tape having terminals (exposed metal parts) on the surface of the tape on the pressure-sensitive adhesive layer side (electroconductive pressure-sensitive adhesive tape having through-holes) was obtained.

### EXAMPLE 2

The tack tape for electroconductive pressure-sensitive adhesive tape was dispensed from the above-prepared roll and punched by passing through between a positive-die roll and a negative-die roll so that the metallic foil side of the tack tape for electroconductive pressure-sensitive adhesive tape come in contact with the positive-die roll. Thus, there were formed through-holes and, on the surface of the tack tape on the pressure-sensitive adhesive layer side, fins (burrs) of the metallic foil. The positive-die roll bears, on its surface, pins each having the shape illustrated in Figs. 9 and 10 (where "c" = 1.0427 mm, "d" = 1.8061 mm, "e" = 60°, "f" = 1.2 mm, and "g" = 0.1 mm) and being arranged in the pattern illustrated in Fig. 11 (where "h" = 2.598 mm and "i" = 1.5 mm). The negative-die roll has, in its surface, cylindrical concavities illustrated in Fig. 12 each having a diameter of 1.6 mm and a depth of 1.4 mm.
Next, the release paper was removed, and a squeegee (material: iron (FK4), edge angle: 45°, edge R (edge radiums): 0.5) and the electroconductive pressure-sensitive adhesive tape were arranged as illustrated in Fig. 15 so that an angle (the angle 43 in Fig. 15) formed between the surface of the pressure-sensitive adhesive layer and the edge of the squeegee be 70° and so that the surface of the pressure-sensitive adhesive layer be in contact with the edge of the squeegee (namely, the edge of the squeegee be held against the surface of the pressure-sensitive adhesive layer). Then the pressure-sensitive adhesive layer was moved (slid) at a rate of 1 m/minute, and the fins were thereby folded back.

Next, a separator was applied to the surface of the pressure-sensitive adhesive layer, and the article was allowed to pass through between press rolls to thereby simultaneously perform lamination of the separator and press working on the article to smoothen the folded-back fins and the pressure-sensitive adhesive layer. Thus, an electroconductive pressure-sensitive adhesive tape having terminals (exposed metal parts) on the surface of the tape on pressure-sensitive adhesive layer side (electroconductive pressure-sensitive adhesive tape having through-holes) was obtained.

### COMPARATIVE EXAMPLE 1

The tack tape for electroconductive pressure-sensitive adhesive tape was dispensed from the above-prepared roll and punched by passing through between a positive-die roll and a negative-die roll so that the metallic foil side of the tack tape for electroconductive pressure-sensitive adhesive tape come in contact with the positive-die roll. Thus, there were formed through-holes and, on the pressure-sensitive adhesive layer side surface, fins (burrs) of the metallic foil. The positive-die roll bears, on its surface, pins each having the shape illustrated in Figs. 9 and 10 (where "c" = 1.0427 mm, "d" = 1.8061 mm, "e" = 60°, "f" = 1.2 mm, and "g" = 0.1 mm) being arranged in the pattern illustrated in Fig. 11 (where "h" = 2.598 mm and "i" = 1.5 mm). The negative-die roll has, in its surface, cylindrical concavities illustrated in Fig. 12 each having a diameter of 1.6 mm and a depth of 1.4 mm.
Next, a separator was applied to the surface of the pressure-sensitive adhesive layer, and the resulting article was passed through between press rolls as illustrated in Fig. 16 for press working, by which the fins were crushed to form terminals. Thus, an electroconductive pressure-sensitive adhesive tape (electroconductive pressure-sensitive adhesive tape having through-holes) was obtained.

### [Evaluations]

The electroconductive pressure-sensitive adhesive tapes obtained in the examples and the comparative example were examined and evaluated in the following manner. The results are indicated in Table 1.

### (1) Resistance (Thermo-cycle Test)

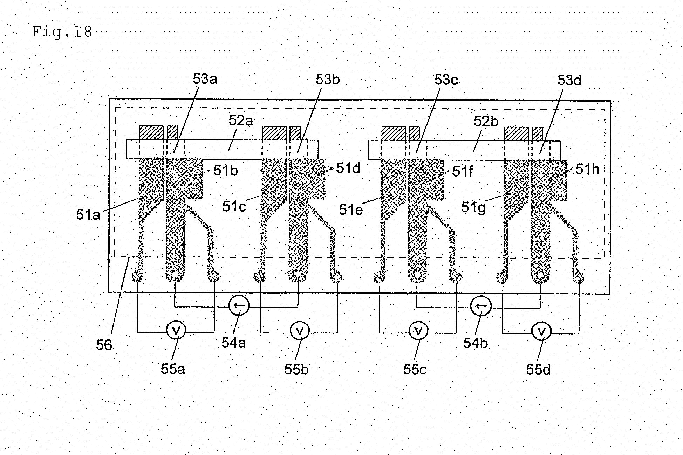

### (Preparation of Testing Substrate) (see Fig. 18)

Each of the electroconductive pressure-sensitive adhesive tapes obtained in the examples and the comparative example was cut out to give pieces of a size of 6 mm wide by 60 mm long, from which the separator was removed, and the residual parts were used as electroconductive pressure-sensitive adhesive tape specimens.
Separately, a glass epoxy substrate bearing silver-plated conductor traces 51a to 51h in the arrangement illustrated in Fig. 18 was prepared, in which the conductor traces were each composed of 18 µm of Cu, 3 to 7 µm of Ni, 0.03 µm of Au, and 5 µm of Ag arranged in this order. The electroconductive pressure-sensitive adhesive tape specimens (52a and 52b) were affixed (compression-bonded) to the glass epoxy substrate (thickness: 1.6 mm) by one reciprocating movement of a 5-kg roller so that affixed regions 53a to 53d in the electroconductive pressure-sensitive adhesive tape affixed to the conductor traces each have a size of 5 mm by 6 mm (area: 30 mm²). Next, constant-current power supplies (54a and 54b) and potentiometers (55a to 55d) were connected via lead wires to the conductor traces 51a to 51h by soldering.
An electric circuit in the testing substrate illustrated in Fig. 18 corresponds to an electric circuit having an arrangement of two pieces of the electric circuit in the testing substrate illustrated in Fig. 1.

### (Preparation of Resistance-testing Sample)

A thermosetting EVA film (thickness: 0.6 mm) having a vinyl acetate content of 28% was laid on a region 56 in the testing substrate illustrated in Fig. 18, a glass plate (thickness: 3.2 mm) was further laid thereon, and thereby yielded a laminate having a structure of "(testing substrate)J(EVA film)/(glass plate)." The laminate was placed in a vacuum pressing machine, in which evacuation was initially performed at 150°C for 40 seconds without pressing, the laminate in the evacuation state was then pressed at a temperature of 150°C and a pressure of 0.1 MPa for 400 seconds, but the evacuation was completed 400 seconds from the beginning thereof. The laminate was then retrieved from the vacuum pressing machine and heated in an oven at 150°C for 40 minutes to thermally cure the EVA. Thus, a series of resistance-testing samples was obtained.

### (Setting of In-chamber Ambient Temperature)

Using a product under the trade name "PL-3K" (supplied by ESPEC Corporation) as a chamber, an in-chamber temperature (thermo-cycle condition) was set as follows. During the repeat of cooling and heating under the conditions below, the humidity (relative humidity) in the chamber was not specifically controlled, and the relative humidity in the chamber was 50% at the start.
The temperature was 25°C at the start, lowered from 25°C to -40°C at a rate of 100°C/hour, and held at -40°C for 10 minutes. Next, the temperature was raised from -40°C to 85°C at a rate of 100°C/hour, and held at 85°C for 10 minutes. Then, the temperature was lowered to 25°C at a rate of 100°C/hour. Such thermo-cycle condition was regarded as one cycle, and repeated 200 times.
Fig. 5 illustrates exemplary profiles of the in-chamber temperature (ambient temperature) of the chamber (thermostatic chamber) and the surface temperature of the electroconductive pressure-sensitive adhesive tape when the in-chamber temperature was controlled according to the temperature setting (thermo-cycle condition).

### (Measurement of Resistance)

While applying a constant current of 2 A to the resistance-testing sample by the constant-current power supplies (54a and 54b) (namely, while applying a constant current of 2 A to the affixed regions 53a to 53d in Fig. 18), the sample was placed in the chamber controlled at an in-chamber ambient temperature of 25°C, and repeatedly cooled and heated in accordance with the thermo-cycle condition. During the cycles, the voltage was continuously measured (sampling interval: once per one minute) with the potentiometers (55a to 55d) to continuously collect the resistance (contact resistance) data of each of the affixed regions 53a to 53d. Thus, the maximum resistance in the first cycle (initial resistance) and the maximum resistance in the 200th cycle were measured, and the resistance ratio was determined by calculation. Table 1 gives the averages (N=4) of the resistances and the resistance ratios each measured at the affixed regions 53a to 53d. Fig. 17 depicts an example of the results of resistance measurement using the electroconductive pressure-sensitive adhesive tape according to Example 2.

### (2) Areas of Terminals (Total Area of Terminals and Average Terminal Area)

Each of the electroconductive pressure-sensitive adhesive tapes obtained in the examples and the comparative example was cut out to pieces with a size of 5 mm wide by 6 mm long (area: 30 mm²), from which the separator was removed, and the residual part was used as a test portion.
The surface of the test portion on the pressure-sensitive adhesive layer side was observed with a digital microscope (product number "VHX-600" supplied by Keyence Corporation) at a 200-fold magnification (using "VH-Z20" lens), by which a picture (image in the plane of projection) of a terminal was observed. Next, a region of the terminal in the picture was specified in a measurement mode, the area of the region was measured, and thereby the area of the terminal was determined. Likewise, areas of all terminals present in the test portion were measured, summed up, and a total area of terminals present per 30 mm² of the pressure-sensitive adhesive layer was determined.
Separately, the number of through-holes present in the test portion was counted, and the above-determined total area of terminals per 30 mm² of the pressure-sensitive adhesive layer was divided by the number of through-holes to determine an average terminal area per one through-hole.

[Table 1]

**(TABLE 1)**

| | | Example 1 | Example 2 | Comparative Example 1 |
|---|---|---|---|---|
| Pressure-sensitive adhesive layer thickness | (µm) | 45 | 45 | 45 |
| Metallic foil type | | tin-coated copper foil | tin-coated copper foil | tin-coated copper foil |
| Metallic foil thickness | (µm) | 35 | 35 | 35 |
| Resistance ratio | (time) | 1.7 | 1.4 | 6.0 |
| Conduction system | | through-hole system | through-hole system | through-hole system |
| Total area of terminals | (mm²/30 mm²) | 0.26 | 0.80 | 0.06 |
| Average terminal area | (µm²) | 66000 | 210000 | 16000 |
| Number of through-holes | (per 30 mm²) | 4 | 4 | 4 |
| Initial resistance | (Ω) | 0.007 | 0.004 | 0.004 |

As is evident from the results in Table 1, the electroconductive pressure-sensitive adhesive tapes according to the present invention (Examples) have low resistance ratios and always exhibit stable electrical conductivity. In contrast, a sample having excessively small areas of terminals (total area of terminals present per 30 mm² of the pressure-sensitive adhesive layer, and average terminal area per one through-hole) (Comparative Example) has a large resistance ratio and fails to exhibit stable electrical conductivity.

### Industrial Applicability

The electroconductive pressure-sensitive adhesive tapes according to embodiments of the present invention are advantageously used typically for establishing electrical conduction between two points separated from each other; and for electromagnetic shielding in electric/electronic appliances and cables. They are particularly advantageously applicable to applications where such tapes should exhibit stable electrical conductivity without increase in resistance even when used in various environments and/or used over a long duration. Examples of such applications include grounding of printed circuit boards; grounding of external shielding cases of electronic appliances; earthing for static protection; and internal wiring of power supplies and electronic appliances which are typified by display devices such as liquid crystal display devices, organic electroluminescence (EL) display devices, plasma display panels (PDPs), and electronic papers; and solar cells. Reference Signs List

- 11a to 11d: silver-plated conductor trace (conductor trace)
- 12: electroconductive pressure-sensitive adhesive tape
- 13: affixed region
- 14: constant-current power supply
- 15: potentiometer
- 16: region to be sealed with ethylene-vinyl acetate copolymer (EVA) (sealing region)
- 17: resistance (contact resistance) of affixed region
- 18a: glass epoxy substrate
- 18b: glass plate
- 19: cured article of ethylene-vinyl acetate copolymer (EVA)
- 21: metallic foil
- 22: pressure-sensitive adhesive layer
- 23: electroconductive pressure-sensitive adhesive tape
- 24: terminal
- 25: through-hole
- 26: conducting part
- 27: fin (burr)
- 27a: fin positioned ahead with respect to through-hole 25 in traveling direction of pressure-sensitive adhesive layer
- 27b: fin positioned behind with respect to through-hole 25 in traveling direction of pressure-sensitive adhesive layer
- 28: press roll
- 31: positive die
- 32: negative die
- 41: squeegee (sword squeegee)
- 42: edge angle
- 43: angle formed between surface of pressure-sensitive adhesive layer and edge of squeegee
- 51a to 51h: silver-plated conductor trace (conductor trace)
- 52a, 52b: electroconductive pressure-sensitive adhesive tape (electroconductive pressure-sensitive adhesive tape specimen)
- 53a to 53d: affixed region (affixed region between electroconductive pressure-sensitive adhesive tape and conductor trace)
- 54a, 54b: constant-current power supply
- 55a to 55d: potentiometer
- 56: region to be sealed with ethylene-vinyl acetate copolymer (EVA) (sealing region)

## Claims

1. An electroconductive pressure-sensitive adhesive tape comprising a metallic foil; and a pressure-sensitive adhesive layer present on one side of the metallic foil, wherein the electroconductive pressure-sensitive adhesive tape has a maximum resistance in the first cycle of 1 Ω or less and has a maximum resistance in the 200th cycle being 5 times or less the maximum resistance in the first cycle, each measured in the following thermo-cycle test:
[Thermo-cycle Test]
The electroconductive pressure-sensitive adhesive tape is affixed to a plated silver coating so as to allow an affixed region to have a size of 5 mm by 6 mm (area: 30 mm²); a constant current of 2 A is applied to the electroconductive pressure-sensitive adhesive tape and the plated silver coating including the affixed region; this is placed in a thermostatic chamber, cooled and heated in repeated cycles, and, during the repeated cycles, a resistance of the affixed region is continuously measured, in which a temperature in the thermostatic chamber is preset so that the temperature is lowered from 25°C to -40°C, held at -40°C for 10 minutes, raised to 85°C, held at 85°C for 10 minutes, and lowered again to 25°C, and this thermo-cycle is regarded as one cycle and repeated.

2. The electroconductive pressure-sensitive adhesive tape according to claim 1, comprising the metallic foil; the pressure-sensitive adhesive layer present on one side of the metallic foil; and a terminal or terminals exposed from a surface of the tape on the pressure-sensitive adhesive layer side, wherein the electroconductive pressure-sensitive adhesive tape has a total area of the terminal or terminals of from 0.15 to 5 mm² per 30 mm² of the pressure-sensitive adhesive layer.

3. The electroconductive pressure-sensitive adhesive tape according to claim 2, wherein the terminal or terminals are a terminal or terminals each formed by boring a through-hole from the metallic foil side to form a fin or fins of the metallic foil on a surface of the tape on the pressure-sensitive adhesive layer side, and folding back the fin or fins.

4. The electroconductive pressure-sensitive adhesive tape according to claim 3, wherein the electroconductive pressure-sensitive adhesive tape has an average terminal area of from 50,000 to 500,000 µm² per one through-hole.

5. An electroconductive pressure-sensitive adhesive tape comprising a metallic foil; a pressure-sensitive adhesive layer present on one side of the metallic foil; and a terminal or terminals exposed from a surface of the tape on the pressure-sensitive adhesive layer side, wherein the electroconductive pressure-sensitive adhesive tape has a total area of the terminal or terminals of from 0.15 to 5 mm² per 30 mm² of the pressure-sensitive adhesive layer.

6. The electroconductive pressure-sensitive adhesive tape according to claim 5, wherein the terminal or terminals are a terminal or terminals each formed by boring a through-hole from the metallic foil side to form a fin or fins of the metallic foil on a surface of the tape on the pressure-sensitive adhesive layer side, and folding back the fin or fins.

7. The electroconductive pressure-sensitive adhesive tape according to claim 6, wherein the electroconductive pressure-sensitive adhesive tape has an average terminal area of from 50,000 to 500,000 µm² per one through-hole.
